(19) Europäisches Patentamt
European Patent Office
Office européen des brevets

(11) **EP 3 175 524 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **15747750.6**

(22) Anmeldetag: **30.07.2015**

(51) Int Cl.:
*H02G 3/04* (2006.01)     *H02G 11/02* (2006.01)
*A61G 12/00* (2006.01)     *A61G 13/10* (2006.01)
*B65H 75/42* (2006.01)     *B65H 75/44* (2006.01)

(86) Internationale Anmeldenummer:
**PCT/EP2015/001571**

(87) Internationale Veröffentlichungsnummer:
**WO 2016/015870 (04.02.2016 Gazette 2016/05)**

(54) **BEWEGUNGSTOLERANTE LEITUNGSFÜHRUNG FÜR EINE STATIVVORRICHTUNG**

MOVEMENT-TOLERANT CONDUIT FOR A STAND DEVICE

CÂBLAGE SOUPLE POUR UN DISPOSITIF À PIED

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2014 EP 14002656**

(43) Veröffentlichungstag der Anmeldung:
**07.06.2017 Patentblatt 2017/23**

(73) Patentinhaber: **Ondal Medical Systems GmbH 36088 Hünfeld (DE)**

(72) Erfinder:
• **OGINSKI, Stefan 36041 Fulda (DE)**

• **BAUDITZ, Ronny 98528 Suhl (DE)**
• **HAPPEL, Jonathan 36142 Tann (Rhön) (DE)**

(74) Vertreter: **Graf von Stosch, Andreas et al Graf von Stosch Patentanwaltsgesellschaft mbH Prinzregentenstraße 22 80538 München (DE)**

(56) Entgegenhaltungen:
WO-A1-2008/112675     JP-A- H09 278 293
JP-B2- 5 356 892     NL-C2- 1 030 276

EP 3 175 524 B1

**Beschreibung**

Die vorliegende Erfindung betrifft eine bewegungstolerante Leitungsführung, insbesondere für eine Stativvorrichtung eingerichtet zur Anordnung im Operationssaal, insbesondere auch zum örtlichen Verlagern einer medizintechnischen Einrichtung im Operationssaal, umfassend eine Lagerungseinrichtung zum bewegungstoleranten Lagern wenigstens einer Leitung, insbesondere eines Kabels, um eine Drehachse zwischen zwei relativ zueinander verlagerbaren, insbesondere verdrehbaren Verbindungsbauteilen; und eine Befestigungseinrichtung zum Anordnen der wenigstens einen Leitung relativ zu einem der Verbindungsbauteile, insbesondere an einer Buchse der Stativvorrichtung. Die vorliegende Erfindung betrifft insbesondere eine bewegungstolerante Leitungsführung mit einzelnen Merkmalen des Anspruchs 1 sowie ein Drehgelenk, eine Buchse oder eine Stativvorrichtung jeweils mit einer solchen Leitungsführung, sowie die Verwendung einer solchen Leitungsführung an einer Stativvorrichtung, insbesondere im Operationssaal.

Stative, insbesondere Deckenstative wie z.B. Deckenversorgungseinheiten, Monitorträger, oder so genannte Federarme oder Zentralachsen, weisen meist einen oder mehrere in Bezug auf eine Vertikalposition starr angeordneten oder höhenverstellbaren Träger auf, mittels welchen eine daran befestigte medizintechnische Einrichtung bewegt und positioniert werden kann, z.B. im Operationssaal, insbesondere auch auf einer Intensivstation. An den Stativen sind häufig Versorgungseinheiten montiert, an welchen z.B. medizinisch-elektrische Endgeräte angeordnet sind, die z.B. während einer Operation mit den benötigten Medien versorgt werden. Die Träger definieren dabei einen Aktionsradius der medizintechnischen Einrichtung, in welchem die medizintechnische Einrichtung innerhalb des Operationssaals positioniert werden kann. Die Träger können meist zumindest um wenigstens eine drehbare Verbindung, insbesondere ein Drehgelenk verdreht werden. Wahlweise sind die Träger auch höhenverstellbar und/oder um eine zumindest annähernd horizontal ausgerichtete Achse in der Höhe verschwenkbar angeordnet.

Bei solchen Stativen ist ein möglichst großer Bewegungsfreiheitsgrad wünschenswert. Eine möglichst große relative Bewegung, insbesondere Drehung, eines Trägers relativ zu einem weiteren Träger kann sicherstellen, dass die medizintechnische Einrichtung in vielen unterschiedlichen Positionen oder für viele unterschiedliche Zwecke positioniert werden kann. Der relative Drehbereich zwischen zwei Trägern beträgt dabei bevorzugt mindestens 300° oder 330°, bei manchen Varianten sogar z.B. 420° oder mehr. Die medizintechnische Einrichtung stellt dabei meist auch Versorgungsmedien bereit und muss selbst elektrisch versorgt werden, so dass innerhalb von einzelnen Trägern und/oder an den Schnittstellen zwischen Trägern, insbesondere innerhalb von Drehgelenken, Leitungen oder Kabel derart verlegt sein müssen, dass eine relative Drehbewegung ermöglicht wird. Weist das Stativ nun eine Vielzahl von an einer Zentralachse gelagerten Trägern auf, so stellt sich das Problem, dass von der Decke bis zum untersten Träger ein Drehbereich überbrückt werden muss, welcher deutlich größer als 300° oder 330° sein kann. Der Drehbereich kann z.B. auch 420° betragen. Bei manchen Stativen ist der relative Drehbereich auch einstellbar, so dass ein Bedarf für eine Kabelführung besteht, welche die Funktion der medizintechnischen Einrichtung weitgehend unabhängig von einer bestimmten Drehposition innerhalb eines großen Aktionsradius des Stativs sicherstellen kann.

Es sind Stative bekannt, bei welchen innerhalb des Stativs verlaufende Leitungen an einer Oberseite des Stativs durch eine obere Abdeckung, z.B. einen rotationssymmetrischen Drehbaldachin, abgedeckt werden, und an einer Unterseite des Stativs durch einen an einem Drehgelenk vorgesehenen Deckel, z.B. einer unteren Abdeckung. Der Drehbaldachin kann dabei durch eine kugelförmige Abdeckung gebildet sein, die in eine obere und eine untere Hälfte aufgeteilt sein kann, wobei die obere Hälfte mit einem feststehenden Teil des Stativs und die untere Hälfte an einem drehbaren Teil befestigt ist. Der Deckel ermöglicht, Leitungen von unten in eine Spindel des Stativs einzuführen und durch die Spindel hindurch und weiter in der Decke eines Operationssaals zu verlegen. Sowohl im Drehbaldachin als auch im Deckel kann eine Leitung bzw. ein Kabel dabei so angeordnet werden, dass es bewegungstolerant gelagert ist und nicht aus dem Träger hervorragt. Die Gefahr des Verhakens kann damit verringert oder ausgeschlossen werden. Bei diesen Abdeckungen der Leitungen ist eine Durchverkabelung jedoch in vielen Fällen nicht auf einfache Weise möglich. Meist können die Abdeckungen nur die Lagerung der jeweiligen Leitung an einem von unten oder oben zugänglichen Träger oder Drehgelenk sicherstellen. Sobald nun an einer Zentralachse drei oder mehr Drehgelenke oder Träger vorgesehen sind, stellt sich das Problem, dass zumindest eine/die Leitung am mittleren Träger nicht auf einfache Weise bewegungstolerant abgedeckt oder gelagert werden kann.

Ferner sind Stative bekannt, die an einem jeweiligen Drehgelenk irgendeine Befestigungseinrichtung aufweisen, an welcher eine Leitung, insbesondere ein Kabel, befestigt werden kann, um die Leitung bewegungstolerant um das Drehgelenk herum zu lagern. Beispielsweise wird eine Spirale ist an der Spindel befestigt, wobei ein aus der Spindel austretendes Kabel in der Spirale eingelegt ist. Das Kabel verfügt über eine integrierte Zugfeder, welche das Kabel unter Zugspannung hält. Bei einer Drehbewegung wird das Kabel je nach Drehrichtung auf die Spirale aufgerollt oder davon abgerollt, ähnlich wie bei einer Kabeltrommel. Durch die Zugfeder wird sichergestellt, dass das Kabel nicht aus den Windungen der nach außen offenen Spirale herausrutscht.

Bei vorbekannten Stativen ist die Kabelführung mit Schwierigkeiten verbunden. Meist muss ein Kabel oder eine Leitung an einem bestimmten Drehgelenk angeordnet werden und kann nicht frei von einem Träger zum nächsten Träger geführt werden. Dies erschwert die Versorgung der medizintechnischen Einrichtung, insbesondere bei Stativen mit großem Bewegungsfreiheitsgrad oder bei Stativen, bei welchen der Aktionsradius auf möglichst flexible Weise einstellbar sein soll.

WO 2008/112675 A1 beschreibt ein Beleuchtungs-/Monitorsystem mit bewegungstoleranter Leitungsführung. Es ist eine Montageplatte und eine Nabenbaugruppe vorgesehen. Die Nabenbaugruppe ist an der Montageplatte fixierbar. Wenigstens eine Leitung innerhalb der Nabenbaugruppe ist um die Drehachse drehtolerant führbar.

JP H09 278293 A beschreibt eine Drahtmaterialschutzvorrichtung, die durch Verbinden mehrerer Schutzwerkzeuge mittels Stiften und Stiftlöchern zu einer Kettenform aufgebaut ist. Das Drahtmaterial, beispielsweise ein Kabel, ist im Inneren gelagert.

NL 103278276 C2 offenbart eine Anordnung mit einer Trommel, die für eine Gliederkette vorgesehen ist, die aus einer Anzahl benachbarter Gelenkglieder besteht.

JP 5356892 B beschreibt eine Gliederkette mit Aussparung zwischen den Gliedern, welche eine hohe Flexibilität der Gliederkette gewährleisten.

Es ist eine Aufgabe der vorliegenden Erfindung, eine Vorrichtung oder Anordnung für ein Drehgelenk oder eine Buchse oder ein Stativ, insbesondere Deckenstativ bereitzustellen, womit eine Lagerung oder Führung von Leitungen, insbesondere Kabeln um ein Drehgelenk, z.B. zwischen zwei Tragarmen des Stativs, erleichtert werden kann. Insbesondere besteht die Aufgabe darin, eine Anordnung bereitzustellen, mittels welcher eine Durchverkabelung auf einfache Weise erfolgen kann, insbesondere unabhängig von einer bestimmten Anzahl von Tragarmen oder Drehgelenken eines Stativ und/oder bewegungstolerant in Bezug auf einen bestimmten Betrag eines relativen Drehwinkels. Die Aufgabe kann auch darin gesehen werden, eine Vorrichtung oder Anordnung bereitzustellen, mittels welcher wenigstens eine Leitung ohne Risiko eines Verhakens oder ungewollter Belastungen auf praktikable Weise zwischen zwei relativ zueinander verlagerbaren Punkten angeordnet oder verlegt werden kann.

Diese Aufgabe wird gelöst durch eine bewegungstolerante Leitungsführung, insbesondere für eine Stativvorrichtung eingerichtet zur Anordnung im Operationssaal, umfassend

- eine Lagerungseinrichtung zum bewegungstoleranten Lagern wenigstens einer Leitung um eine Drehachse zwischen zwei relativ zueinander verlagerbaren Verbindungsbauteilen; und
- eine Befestigungseinrichtung zum Anordnen der wenigstens einen Leitung relativ zu einem der Verbindungsbauteile;

wobei die Lagerungseinrichtung an der Befestigungseinrichtung fixierbar ist und zum bewegungstoleranten, insbesondere drehtoleranten Führen der wenigstens einen Leitung um die Drehachse und/oder in Richtung zumindest annähernd parallel zur Drehachse eingerichtet ist und wobei die Lagerungseinrichtung in der Art einer Gliederkette gebildet ist, wobei die Lagerungseinrichtung durch einzelne Glieder oder Wirbel gebildet ist, welche jeweils mittels wenigstens eines Verbindungsabschnitts relativ zueinander bewegbar sind und die Verbindungsabschnitte durch Aussparungen zwischen den einzelnen Gliedern definiert werden.

Hierdurch kann auf einfache Weise eine Durchverkabelung erfolgen, insbesondere unabhängig von der Anzahl von Drehgelenken oder Trägern, und auch unabhängig von einem bestimmten Bewegungsfreiheitsgrad oder Aktionsradius der Stativvorrichtung. Die Verwendung von Schleifkupplungen, insbesondere Schleifringen oder speziellem leitfähigem Material für die Verbindungsbauteile ist nicht erforderlich. Auch kann eine Leitung, insbesondere ein Kabel, geschont werden. Die Leitung wird unabhängig von einer bestimmten Drehposition weder auf Zug noch auf Druck beansprucht, und die Leitung wird auch nicht stark verbogen oder geknickt. Beim Aufweiten oder Zusammenziehen der Lagerungseinrichtung verändert sich deren Biegeradius lediglich in sehr moderater Form, so dass auch innerhalb der Lagerungseinrichtung angeordnete Leitungen wenn überhaupt dann nur sehr moderat verformt werden.

Dabei beruht die Erfindung auf dem Konzept, eine Leitung um einen bestimmten Umfangswinkel um eine Drehachse herum anzuordnen, bevorzugt mit mehreren Windungen, um dadurch einen hohen Grad an Bewegungstoleranz sicherzustellen. Gleichzeitig kann eine jeweilige Leitung entlang eines vordefinierten Pfades gelagert werden, insbesondere ohne Schlaufen oder Knicke. Bevorzugt wird jede Leitung spiralförmig um die Drehachse angeordnet und bleibt unabhängig von einer bestimmten Drehwinkelposition spiralförmig angeordnet.

Neben dem Vorteil, dass auch Leitungen in mittig angeordneten Ausleger bei drei- oder vierteiligen Zentralachsen verlegt werden können, liefert die Leitungsführung auch den Vorteil einer bauraumoptimierten Anordnung. Ein Drehbaldachin hingegen erfordert eine vergleichsweise große Bauhöhe (z.B. ca. 200 mm). Erfindungsgemäß kann die Leitungsführung in einer Buchse angeordnet werden und somit Bauhöhe eingespart werden, was vor allem bei Operationsräumen mit geringeren Deckenhöhen (ca. 2,5m) einen großen Vorteil darstellt: es lässt sich eine größere Durchgangshöhe unter dem Stativ realisieren. Auch kann im Gegensatz zu einem Drehbaldachin das Risiko ausgeschlossen werden, dass aufgrund des Fehlens einer eindeutigen Führung zu wenig oder zu viel Kabellänge verlegt wird. Die erfindungsgemäße Leitungsführung gibt die zu verlegende Länge der Leitung(en) vor, was auch die Montage für einen Monteur vereinfacht, welcher keine Kenntnis vom spezifischen Anwendungsfall der Stativvorrichtung hat.

Bevorzugt ist die Lagerungseinrichtung eingerichtet, die wenigstens eine Leitung von einem Befestigungspunkt oder der Befestigungseinrichtung ausgehend in axialer Richtung entlang der Drehachse zu führen.

**EP 3 175 524 B1**

Als "bewegungstolerant" ist dabei bevorzugt eine Vorrichtung oder Anordnung zu verstehen, welche einen Bewegungsfreiheitsgrad in wenigstens eine Richtung oder um wenigstens eine Achse ermöglicht. Bevorzugt bezieht sich der Begriff "bewegungstolerant" auf eine Anordnung, bei welcher eine Relativbewegung zwischen zwei relativ zueinander verlagerbaren Befestigungspunkten oder Befestigungseinrichtungen erfolgt. Eine bewegungstolerante Anordnung kann dabei eine drehtolerante Anordnung umfassen.

Als Leitungsführung ist dabei bevorzugt eine Vorrichtung oder Anordnung zu verstehen, mittels welcher wenigstens eine Leitung gelagert und entlang eines vorbestimmten Pfades geführt werden kann, insbesondere derart, dass sich die Leitung nicht verhaken kann, sei es mit anderen Leitungen oder irgendwelchen Komponenten, mit welchen die Leitung bei einer Relativbewegung möglicherweise in Berührung kommen könnte. Bevorzugt ist die Leitungsführung eingerichtet, mehrere Leitungen zwischen zwei relativ zueinander verlagerbaren Befestigungspunkten zu lagern und zu führen. Als Leitungen können Kabel, Gas- oder Flüssigkeitsschläuche, Lichtwellenleiter oder dergleichen verlegt werden. Bevorzugt werden zumindest auch Monitorkabel von der Leitungsführung gelagert und geführt.

Als Stativvorrichtung ist dabei bevorzugt eine Vorrichtung zum Halten, ortsfesten Anordnen und/oder Verlagern mindestens einer medizintechnische Einrichtung zu verstehen, die an einer Wand (in einem Wandlager) oder einer Raumdecke oder auch am Boden eines Operationssaals oder irgendeines anderen Raumes für medizinische Zwecke fest montiert oder positioniert werden kann, also z.B. ein Deckenstativ. Die Stativvorrichtung ist dann nicht vollkommen frei im Operationssaal verlagerbar, sondern kann nur in einem bestimmten Aktionsradius verlagert werden, insbesondere relativ zu einem an einer Raumdecke oder Wand des Operationssaals angeordneten Befestigungspunkt bzw. Montagepunkt. Die Stativvorrichtung kann als an einer Raumdecke montierte Deckenversorgungseinheit ausgebildet sein und eine oder mehrere Versorgungskonsolen aufweisen, welche an einem oder zwei Tragarmen gelagert und positionierbar ist. Die Stativvorrichtung kann auch als Monitorträger ausgebildet sein. Die Stativvorrichtung kann auch als so genannter, insbesondere an einer Wand montierter Federarm ausgebildet sein und z.B. eine Leuchte aufweisen. Ein Federarm weist dabei eine bewegbare, insbesondere höhenverstellbare Mechanik auf, die eine Last in verschiedenen Höhen halten kann unter dem Einsatz geringer Bedienkräfte (bis ca. 50 N) manuell verstellbar ist. Die Stativvorrichtung kann auch als so genannte, insbesondere an einer Raumdecke montierte Zentralachse ausgebildet sein und eine Mehrzahl von Tragsystemen mit jeweils mindestens einem Träger aufweisen, an welchem z.B. ein Monitor oder eine Leuchte gelagert ist. Bevorzugt weist die Stativvorrichtung mindestens zwei Tragarme auf, an welchen jeweils mindestens eine Bremseinrichtung oder Bremsschraube vorgesehen ist.

Als medizintechnische Einrichtung ist dabei bevorzugt eine Versorgungskonsole zu verstehen, mittels welcher Mittel für eine Versorgung eines Patienten und/oder Instrumente für einen Operateur und/oder Licht, Reinluft oder andere im Operationssaal benötigte Medien bereitgestellt werden können. Die medizintechnische Einrichtung weist bevorzugt irgendein Bedienpanel und/oder irgendeine Anzeigevorrichtung zum grafischen Darstellen von z.B. Patientendaten auf.

Als Lagerungseinrichtung ist dabei bevorzugt eine Einrichtung zu verstehen, mittels welcher eine oder mehrere Leitungen zumindest abschnittsweise entlang der Längsachse der Leitungen umgrenzt und entlang eines vorbestimmten Pfades gelagert werden können. Die Lagerungseinrichtung umgrenzt bevorzugt eine Kavität zur Aufnahme der Leitungen. Bevorzugt ist die Kavität derart dimensioniert, dass die Lagerungseinrichtung mehrere Leitungen umhüllen kann und eine Art "Kabelkanal" zur Aufnahme der Leitungen bildet.

Als Verbindungsbauteil ist dabei bevorzugt ein Bauteil zu verstehen, mittels welchem einzelne Träger der Stativvorrichtung mit der Montagevorrichtung und bevorzugt auch untereinander verbunden werden können. Bei einer Stativvorrichtung in Form einer so genannten Zentralachse kann das Verbindungsbauteil als zentral angeordnete Spindel ausgebildet sein, an welcher mehrere Träger oder Tragarme gelagert sind.

Als Befestigungseinrichtung ist dabei bevorzugt eine Einrichtung zu verstehen, mittels welcher eine Befestigung zweier Komponenten an einem vordefinierten Befestigungs- oder Montagepunkt erfolgen kann, so dass die Relativposition der aneinander befestigten Komponenten definierbar ist, zumindest im Bereich der Befestigungseinrichtung. Mit anderen Worten: die Befestigungseinrichtung ist in einem montierten Zustand bevorzugt Teil eines Festlagers, in welchem zwei Komponenten aneinander gekuppelt sind. Somit weist die Befestigungseinrichtung bevorzugt eine erste Kupplung für die erste Komponenten und eine zweite Kupplung für die zweite Komponente auf.

Als Windung ist dabei bevorzugt ein Abschnitt der Lagerungseinrichtung zu verstehen, welcher sich um die Drehachse herum erstreckt, insbesondere um einen Kreisbogen von zumindest annähernd 360°.

Die Befestigungseinrichtung kann dabei einen Befestigungsabschnitt aufweisen, mittels welchem die Befestigungseinrichtung am Verbindungsbauteil befestigt werden kann. Der Befestigungsabschnitt ist z.B. als Steckkupplung ausgebildet und weist z.B. hervorstehende Haken oder Vorsprünge auf, welche geometrisch korrespondierend zu Aussparungen am Verbindungsbauteil ausgebildet sind oder in korrespondieren Aussparungen eingreifen können.

Bevorzugt sind zwei unterschiedlich aufgebaute Befestigungseinrichtungen vorgesehen, wobei die eine Befestigungseinrichtung beispielsweise für eine Lagerung und Führung der wenigstens einen Leitung im Wesentlichen geradlinig (ohne spürbare oder aufgezwungene Krümmung) entlang der Längsachse eingerichtet ist, und wobei die andere Befestigungseinrichtung beispielsweise für eine Lagerung und Führung der wenigstens einen Leitung um eine Krümmung oder einen Winkel von zumindest annähernd 45° bis 120°, bevorzugt 70° bis 110°, insbesondere 90° eingerichtet ist. Wahlweise kann eine der Befestigungseinrichtungen die Leitungen auch auf eine gekrümmte Bahn von einer tangentialen Richtung in eine Richtung parallel zum Ausleger zwingen, beispielsweise mit einem Biegeradius von ca. 40mm.

Gemäß einer Variante sind zwei Befestigungseinrichtungen vorgesehen, von denen eine obere Befestigungseinrichtung das obere Ende der Lagerungseinrichtung mit der Buchse verbindet. Durch eine Öffnung in der Buchse lassen sich die Leitungen vom Ausleger bis in die Lagerungseinrichtung verlegen. Die obere Befestigungseinrichtung kann dabei schlauchartig ausgebildet sein. Eine untere Befestigungseinrichtung ist bevorzugt scheibenartig aufgebaut. Durch die Scheibenform kann die untere Windung der Lagerungseinrichtung geführt und gelagert werden. Mittels des scheibenartigen Aufbaus kann auch vermieden werden, dass die unterste Windung an der Buchse entlang schleift oder reibt.

Gemäß einem Ausführungsbeispiel erstreckt sich die Lagerungseinrichtung entlang einer Längsachse der Lagerungseinrichtung um die Drehachse herum, insbesondere mit mindestens einer Windung, bevorzugt mindestens 330°. Diese Anordnung kann eine große Bewegungstoleranz sicherstellen. Beispielsweise umgrenzt die Leitungsführung in einem entspannten Zustand eine Kavität oder ein Volumen mit einem Durchmesser von 10 bis 20cm. In einem verspannten, insbesondere tordierten oder aufgeweiteten Zustand (in Abhängigkeit von der Richtung einer Drehbewegung um eine Drehachse) umgrenzt die Leitungsführung dann z.B. ein Volumen mit einem Durchmesser von 5 bis 30cm.

Gemäß einem Ausführungsbeispiel ist die Lagerungseinrichtung mittels einer Steckverbindung an der Befestigungseinrichtung fixierbar. Dies ermöglicht eine einfache Montage und auch einen variierbaren Aufbau der Leitungsführung.

Gemäß einem Ausführungsbeispiel ist die Lagerungseinrichtung elastisch verformbar, wobei die Lagerungseinrichtung bevorzugt im Durchmesser und/oder in Richtung zumindest annähernd parallel zur Drehachse variabel ist. Die Lagerungseinrichtung kann zumindest abschnittsweise aus einem elastisch verformbaren Material ausgebildet sein. Bevorzugt ist die gesamte Lagerungseinrichtung aus demselben Material ausgebildet. Hierdurch kann die Bewegungstoleranz unabhängig von einer spezifische geometrischen Ausgestaltung der Leitungsführung sichergestellt werden.

Bevorzugt ist wenigstens eine der mindestens einen Windung elastisch kontrahierbar und/oder expandierbar, insbesondere sowohl in axialer als auch in radialer Richtung. Hierdurch kann die Leitung sowohl durchmesservariabel als auch in axialer Richtung variabel/bewegungstolerant gelagert werden.

Gemäß einer Variante weist die Lagerungseinrichtung ein Elastizität oder Steifigkeit auf, welche derart eingestellt ist, dass die Lagerungseinrichtung eingerichtet ist, wenigstens eine Leitung zu tragen und in einem vordefinierten Bewegungsbereich zu lagern, insbesondere zwischen einer vordefinierten ersten Axialposition und einer vordefinierten zweiten Axialposition und/oder zwischen einer vordefinierten ersten Radialposition und einer vordefinierten zweiten Radialposition. Der Bewegungsbereich kann z.B. eine Kavität mit ringzylindrischem Volumen sein, insbesondere mit einer radialen Dicke im Bereich von 1cm bis 10cm, oder 2cm bis 5cm oder 2cm bis 3cm. Die axiale Höhe der Leitungsführung kann dabei frei gewählt werden und insbesondere durch die Anzahl von Segmenten oder Windungen eingestellt werden.

Die Lagerungseinrichtung weist z.B. ein radiales Querschnittsprofil mit einem Durchmesser im Bereich von 2cm bis 10cm oder 3cm bis 8cm auf. Der Durchmesser richtet sich jedoch stark nach der Art und Anzahl von Leitungen sowie dem Durchmesser der Buchse.

Gemäß einer Variante ist die Lagerungseinrichtung rohrförmig, zumindest entlang wenigstens eines Abschnitts. Der Querschnitt der Lagerungseinrichtung oder die von der Lagerungseinrichtung umgrenzte Querschnittsfläche kann dabei rund oder eckig, insbesondere rechteckig sein. Die Lagerungseinrichtung kann auch nach oben offene Halbschale ausgebildet sein, bevorzugt weist die Lagerungseinrichtung jedoch eine im Wesentlichen vollständig umlaufende Querschnittskontur auf. Hierdurch kann ausgeschlossen werden, dass Leitungen herausfallen und/oder sich verhaken. Zumindest bei bauraumkritischen Anwendungen kann ein rechteckiger Querschnitt bevorzugt sein, da hiermit eine optimale Raumausnutzung sichergestellt werden kann.

Die Lagerungseinrichtung ist in der Art einer Gliederkette mit relativ zueinander verlagerbaren bzw. im Winkel variabel anordenbaren Gliedern oder Wirbeln ausgebildet. Die einzelnen Glieder oder Wirbel sind vorzugsweise jeweils mittels wenigstens einem Verbindungsabschnitt relativ zueinander bewegbar, wobei die Glieder/Wirbel vorzugsweise ein Querschnittsprofil mit drei Seitenabschnitten aufweisen. Vorteilhaft weisen die Glieder/Wirbel ein U-förmiges Querschnittsprofil mit wenigstens einem an einem oder beiden freien Enden des U-Profils in axialer Richtung abstehenden Lateralabschnitt auf. Die Lagerungseinrichtung weist bevorzugt zumindest abschnittsweise ein rundes, insbesondere kreisrundes, oder ein rechteckiges Querschnittsprofil auf. Ein rechteckiges Querschnittsprofil hat den Vorteil, dass einzelne Windungen aufeinander zur Anlage kommen können und sich gegenseitig stützen können, so dass eine Abstandshaltefunktion auch durch die Windungen selbst erfolgen kann. Auch kann das verfügbare Volumen maximal ausgenutzt werden. Eine im Wesentlichen ebene Oberseite oder Unterseite des rechteckigen Querschnittsprofils kann dabei auch besonders effektiv sicherstellen, dass sich die einzelnen Windungen nicht ineinander legen oder verkeilen oder verklemmen.

Bevorzugt weist die Lagerungseinrichtung eine bevorzugt ebene Unterseite und mindestens eine Seitenfläche zum Führen der wenigstens einen Leitung in radialer Richtung auf. Hierdurch ist die Lagerungseinrichtung eingerichtet, die wenigstens eine Leitung seitlich abzustützen und einen Bewegungsfreiheitsgrad der Leitung in radialer Richtung zu begrenzen.

Die Lagerungseinrichtung begrenzt z.B. eine Kavität mit einer Querschnittsfläche mit einem Flächeninhalt im Bereich von 200mm$^2$ bis 700mm$^2$, insbesondere 300mm$^2$ bis 600mm$^2$, oder 350mm$^2$ bis 550mm$^2$, oder etwa 400mm$^2$ oder etwa 500mm$^2$. Es hat sich gezeigt, dass eine Querschnittsfläche im Bereich von 500mm$^2$ beispielsweise in Verbindung mit einem Drehwinkel im Bereich von 360° ein zweckdienliches Maß an Bewegungsfreiheit liefert, speziell auch in Hinblick auf den an der Buchse verfügbaren Bauraum. Auch kann eine Querschnittsfläche im Bereich von 350mm$^2$ oder 400mm$^2$ in Verbindung mit einem Drehwinkel im Bereich von 420° geeignet sein. Diese Abmessungen liefern jeweils einen guten Kompromiss zwischen Bewegungsfreiheit einerseits und verfügbarem Platz für die wenigstens eine Leitung andererseits. Die Größe der Querschnittsfläche wird jedoch bevorzugt nicht allein in Abhängigkeit des Drehwinkels gewählt, sondern auch in Abhängigkeit der Anzahl und Größe der zu lagernden Leitungen sowie dem Durchmesser des Verbindungsbauteils.

Bevorzugt erstreckt sich die Lagerungseinrichtung schraubenförmig um mindestens zwei Windungen, insbesondere mindestens 720°, um die Drehachse herum, bevorzugt um drei Windungen.

Gemäß einem Ausführungsbeispiel ist ein Durchmesser oder Krümmungsradius der Lagerungseinrichtung in vordefinierbaren Grenzen veränderbar. Hierdurch kann unabhängig vom Ausmaß einer relativen Drehbewegung zwischen den Verbindungsbauteilen vorgegeben werden, in welchem Bereich die Leitungen angeordnet werden.

Gemäß einem Ausführungsbeispiel weist die Lagerungseinrichtung eine Mehrzahl von Windungen auf, welche gegenseitig führend oder gegenseitig abstützend sind oder aneinanderliegend anordenbar sind. Bevorzugt sind einzelne Segmente oder Windungen der Lagerungseinrichtung in Richtung zumindest annähernd parallel zur Drehachse axial hintereinander in Reihe angeordnet und kommen aufeinander zur Anlage. Ein Segment erstreckt sich dabei z.B. entlang eines Umfangswinkels von 180°, 270° oder 360°. Eine obere Windung kann dabei auf einer darunter liegenden Windung aufliegen. Hierdurch kann sichergestellt werden, dass die einzelnen Segmente in strenger Reihenfolge angeordnet bleiben. Diese axial-serielle Anordnung kann dadurch begünstigt werden, dass die Lagerungseinrichtung oder eine jeweilige Windung oder ein Segment eine zumindest abschnittsweise annähernd ebene Oberfläche und/oder Unterfläche aufweist. Die Oberfläche und/oder Unterfläche kann dabei auch Aussparungen aufweisen. Um ein Verhaken der Windungen zu vermeiden, sind die Aussparungen bevorzugt angefast bzw. abgerundet.

Gemäß einem Ausführungsbeispiel weist die Lagerungseinrichtung einen sich entlang einer Längsachse erstreckenden Längsschlitz oder Zugang auf, durch welchen die mindestens eine Leitung zugänglich ist oder in die Lagerungseinrichtung einlegbar ist. Bevorzugt erstreckt sich der Längsschlitz oder Zugang entlang der gesamten Länge der Lagerungseinrichtung, insbesondere an einer Außenseite oder Außenmantelfläche, so dass eine Leitung in radialer Richtung (von außen) eingelegt oder entnommen werden kann, insbesondere in bereits montiertem Zustand der Lagerungseinrichtung. Dies ermöglicht auch eine (Vor-)Montage der Lagerungseinrichtung ohne dass die wenigstens eine Leitung bereits in der Lagerungseinrichtung vorgesehen sein muss. Der Längsschlitz oder Zugang kann dabei z.B. auch durch zwei aneinander anliegende Kanten von zwei aufeinander gesteckten Hälften gebildet sein.

Die Lagerungseinrichtung weist Aussparungen auf, insbesondere längliche Aussparungen, die abschnittsweise entlang einer Längsachse der Lagerungseinrichtung angeordnet sind und sich bevorzugt quer/orthogonal zur Längsachse in radialer Richtung erstrecken. Mittels der Aussparungen kann die Flexibilität oder Verformbarkeit oder Variabilität der Lagerungseinrichtung auf einfache Weise eingestellt werden, insbesondere abschnittsweise und/oder richtungsabhängig, insbesondere auch im Wesentlichen unabhängig vom verwendeten Material. Bevorzugt sind Aussparungen an mehreren Flächenabschnitten der Lagerungseinrichtung vorgesehen, z.B. sowohl an einer Innenseite als auch einer Unterseite und/oder Außenseite. Dabei kann die Steifigkeit, insbesondere Biegesteifigkeit, oder Flexibilität der Lagerungseinrichtung auch durch die Dimensionierung der Aussparungen oder die Anzahl der Aussparungen eingestellt werden. Es können dabei auch Materialien verwendet werden, welche eine vergleichsweise hohe Steifigkeit aufweisen, so dass die Flexibilität im Wesentlichen durch die Aussparungen eingestellt werden kann. Dies hat z.B. dann Vorteile, wenn die Lagerungseinrichtung eine große Anzahl von Windungen aufweist oder entlang einer vergleichsweise großen Länge in Richtung der Drehachse vorgesehen werden muss.

Die Aussparungen liefern auch den Vorteil, dass die Lagerungseinrichtung auf einfache Weise als robustes steckbares Modulsystem ausgebildet werden kann, denn ein vergleichsweise steifes Material ermöglicht belastbare Rastverbindungen. Mit anderen Worten: Bei Verwendung eines Werkstoffs, der ein Elastizitätsmodul wie von einem steifen Kunststoff, wie z.B. Polyamid aufweist, können Rasthaken vergleichsweise klein dimensioniert werden und eine dauerhaft sichere Verbindung ermöglichen, die auch eine gute Sicherheit bei Drehbewegungen mit besonders großen relativen Drehwinkeln liefert.

Die Anordnung der Aussparungen kann dabei derart erfolgen, dass die Lagerungseinrichtung eine richtungsabhängige (Biege-)Steifigkeit oder Elastizität aufweist. Um eine große Flexibilität in radialer Richtung sicherstellen zu können, kann möglichst viel Material an der Innen- und Außenkontur der Lagerungseinrichtung ausgespart werden. Die Aussparungen können dabei eine weitgehend beliebige Form haben, je nach Anwendungsfall. Die Aussparungen können auch je nach Anwendungsfall unterschiedlich angeordnet sein. Bevorzugt ist Material im Bereich der Innen- und Außenkontur jedenfalls unterbrochen, um die Biegesteifigkeit um die Drehachse gering zu halten. Bevorzugt sind die Aussparungen derart angeordnet, dass Verbindungsabschnitte bzw. eine durchgehende Wirbelsäule möglichst mittig liegen. Dies kann sicherstellen, dass beim Biegen der Lagerungseinrichtung allenfalls geringe Stauchungen und Streckungen der Kabel hervorgerufen werden. Die vergleichsweise struktursteifen Verbindungsabschnitte können sicherstellen, dass die Lagerungseinrichtung unabhängig vom Verformungsgrad eine zumindest annähernd konstante Gesamtlänge aufweist. An Übergängen zwischen Aussparungen und den Verbindungsabschnitten bzw. der tragenden Wirbelsäule können Radien vorgesehen sein, um Materialspannungen zu reduzieren, die beim Aufweiten und Zusammenziehen der Lagerungseinrichtung auftreten. Mit der zuvor beschriebenen Ausgestaltung der Lagerungseinrichtung kann auch Flexibilität in radialer Richtung größer als in Längsrichtung sichergestellt werden.

Gemäß einer Variante sind die Aussparungen in zumindest annähernd gleichen Abständen relativ zueinander angeordnet und weisen zumindest annähernd dieselbe Kontur auf. Hierdurch kann eine Lagerungseinrichtung aus einem vergleichsweise steifen Material bereitgestellt werden, welche elastische Eigenschaften ähnlich jenen einer schraubenförmigen Feder aufweist, wobei dieselben elastischen Eigenschaften entlang der gesamten Lagerungseinrichtung sichergestellt werden können.

Die Aussparungen können auch zwischen einzelnen Gliedern der Lagerungseinrichtung angeordnet sein. Einzelne Glieder können derart aneinander gekuppelt sein, dass dank der Aussparungen eine Relativbewegung der Glieder zueinander erfolgen kann, insbesondere eine Verdrehung um eine Drehachse/Hochachse orthogonal zur Längsachse, so dass die Lagerungseinrichtung eine hohe Durchmesservariabilität aufweist.

Die Lagerungseinrichtung ist in der Art einer Gliederkette aufgebaut, wobei die Lagerungseinrichtung bevorzugt durch einzelne Glieder oder Wirbel gebildet ist, welche jeweils mittels Verbindungsabschnitten relativ zueinander bewegbar sind, wobei die Glieder/Wirbel weiter bevorzugt ein Querschnittsprofil mit drei Seitenabschnitten aufweisen, insbesondere ein U-förmiges Querschnittsprofil mit wenigstens einem an einem oder beiden freien Enden des U-Profils in axialer Richtung abstehenden Lateralabschnitt. Der Aufbau als Glieder- oder Wirbelkette liefert eine große Flexibilität. Es können große Relativbewegungen ausgeglichen werden, insbesondere auch Drehwinkel weit über 360°. Ferner ist die Lagerungseinrichtung dabei problemlos und ohne spürbare Eigenspannungen tordierbar, so dass eine Anpassung des Durchmessers oder der Längserstreckung auch bei einer spiralförmigen Anordnung mit im Abstand zueinander angeordneten Windungen erfolgen kann.

Die Verbindungsabschnitte sind dabei bevorzugt an Stirnseiten der Glieder angeordnet. Die Verbindungsabschnitte greifen bevorzugt an Stirnseiten der Glieder an. Eine Stirnseite entspricht dabei in Längsrichtung gesehen einer Vorderseite oder Hinterseite.

Bevorzugt sind zwei jeweilige Glieder mittels zwei Verbindungsabschnitten aneinander gekuppelt, welche zumindest annähernd mittig an einer Oberseite und an einer Unterseite des jeweiligen Gliedes angreifen bzw. angeordnet sind. Hierdurch kann eine hohe Durchmesservariabilität sichergestellt werden, also das spiralförmige Verkleinern oder Vergrößern des Durchmessers der Lagerungseinrichtung, insbesondere ohne Verwindung oder Tordieren/Torsion der Lagerungseinrichtung um deren Längsachse.

Gemäß einem Ausführungsbeispiel ist die Lagerungseinrichtung modulartig aufgebaut und durch eine Mehrzahl von bevorzugt baugleichen Segmenten gebildet, wobei das jeweilige Segment bevorzugt eine Windung bildet. Jedes Segment kann dabei z.B. durch zwei aufeinander steckbare Segmenthälften gebildet sein. Die Segmente sind bevorzugt aneinander steckbar. Mit steigender Anzahl von Segmenten kann der Bewegungsfreiheitsgrad erhöht werden.

Gemäß einem Ausführungsbeispiel weist die Lagerungseinrichtung wenigstens einen zwischenmontierbaren Segmentabschnitt auf, welcher einen Kupplungsteil oder Kupplungsabschnitt aufweist, an welchen die Befestigungseinrichtung oder ein weiterer Segmentabschnitt kuppelbar ist, insbesondere in Umfangsrichtung steckbar, wobei der Segmentabschnitt bevorzugt einen Kreisbogen von zumindest annähernd 360° beschreibt, insbesondere in einem entspannten, undeformierten Zustand. Bevorzugt weist der Segmentabschnitt an beiden freien Enden einen Kupplungsteil/Kupplungsabschnitt auf, welcher jeweils identisch ausgebildet ist, so dass der Segmentabschnitt wahlweise an eine Befestigungseinrichtung oder einen weiteren Segmentabschnitt kuppelbar ist. Der Segmentabschnitt kann auch als Segment bezeichnet werden. Wahlweise können mehrere Segmentabschnitte ein Segment bilden. Definitionsgemäß ist ein Segment bevorzugt als einstückiges Teil der Lagerungseinrichtung zu verstehen und ein Segmentabschnitt ein aus mindestens zwei Segmenthälften aufgebautes mehrstückiges (bevorzugt zusammensteckbares) Teil.

Gemäß einem Ausführungsbeispiel ist die Lagerungseinrichtung modulartig aufgebaut und durch eine Vielzahl gleicher Segmenthälften gebildet, welche einerseits aufeinander zum Bilden eines jeweiligen Segments und andererseits in Reihe aneinander zum Bilden wenigstens einer Windung gekuppelt, insbesondere gesteckt sind. Ein modulartiger Aufbau ermöglicht dabei, die Leitungsführung auf einfache Weise z.B. für einen bestimmten relativen Drehwinkel auszulegen. Es kann beispielsweise auf einfache Weise ein Segmentabschnitt nachgerüstet werden, falls eine Stativvorrichtung auch für einen größeren oder besonders großen relativen Drehwinkel eingesetzt werden soll. Dies liefert insbesondere im Zusammenhang mit Stativvorrichtungen Vorteile, bei welchen der Drehwinkel einstellbar ist, z.B. auch bei örtlich verlagerbaren Stativvorrichtungen, welche je nach Aufstellungsort einen spezifischen Aktionsradius aufweisen sollen.

Gemäß einem Ausführungsbeispiel ist die Lagerungseinrichtung, insbesondere wenigstens ein Segment der Lagerungseinrichtung, durch eine erste untere Hälfte und eine zweite obere Hälfte gebildet, wobei die Hälften aneinander kuppelbar sind, insbesondere in axialer Richtung steckbar. Hierdurch kann die Erstreckung des Segments in axialer Richtung, d.h. die Höhe des Segments, eingestellt werden, z.B. durch eine in unterschiedlichen Positionen arretierbare Steckverbindung. Auch liefert dieser Aufbau Vorteile in Hinblick auf ein Modul-Konzept.

Gemäß einem Ausführungsbeispiel sind die Segmenthälften identisch aufgebaut. Als Gleichteile ausgebildete Segmenthälften können insbesondere die Montage vereinfachen und die Stückkosten oder Herstellungskosten senken.

Gemäß einem Ausführungsbeispiel weisen die Segmenthälften jeweils Stifte und geometrisch korrespondierend zu den Stiften ausgebildete Stiftaufnahmen auf, mittels welchen die Segmenthälften zu einem jeweiligen Segment zusammengesetzt werden können, insbesondere durch eine mindestens formschlüssige Steckverbindung. Die Steckverbindung kann dabei z.B. auch den Vorteil einer werkzeuglosen Montage oder Erweiterung der Leitungsführung liefern.

Bevorzugt wird die Leitungsführung gebildet durch eine Anordnung von (bevorzugt steckbaren) Einzelkomponenten mit einer Anzahl entsprechend Faktor zwei der Anzahl von Segmentabschnitten, zusätzlich zu zwei Befestigungseinrichtungen. Mit anderen Worten: Bei einem Segmentabschnitt besteht die Leitungsführung aus mindestens vier Einzelkomponenten (insbesondere zwei Segmenthälften und zwei Befestigungseinrichtungen), bei zwei Segmentabschnitten aus sechs Einzelkomponenten, bei drei Segmentabschnitten aus acht Einzelkomponenten, usw. Wahlweise ist nur eine Befestigungseinrichtung vorgesehen, sodass sich die Anzahl von Komponenten jeweils um eine Komponente reduziert.

Gemäß einem Ausführungsbeispiel ist die Befestigungseinrichtung aus einem Oberteil und einem Unterteil gebildet, welche bevorzugt aufeinander steckbar ausgebildet sind.

Gemäß einer speziellen Variante kann die Lagerungseinrichtung der Leitungsführung auch einstückig sein, zumindest abschnittsweise oder segmentweise einstückig, insbesondere in Bezug auf eine jeweilige Windung. Dies kann den Montageaufwand verringert und gleichwohl einen modulartigen Aufbau sicherstellen. Wahlweise kann die Lagerungseinrichtung auch einstückig mit der Befestigungseinrichtung oder mit einer der Befestigungseinrichtungen ausgebildet sein. Beispielsweise ist die Lagerungseinrichtung ein einstückiges Spritzgussteil, welches sich über ein oder mehrere Windungen erstreckt. Der einstückige Aufbau der Lagerungseinrichtung kann z.B. bei kleinen Drehbewegungen, kleinen Drehgelenken oder vergleichsweise leichten oder dünnen Leitungen zweckdienlich sein. Bevorzugt setzt sich die Lagerungseinrichtung jedoch aus einer Vielzahl von Teilen zusammen, insbesondere aus Kostengründen und aufgrund der dadurch reduzierbaren Werkzeug-Komplexität.

Die Lagerungseinrichtung weist eine Vielzahl von spiralförmigen Windungen oder Segmenten auf. Eine spiralförmige Anordnung liefert auch den Vorteil einer beliebigen Erweiterungsfähigkeit.

Gemäß einem Ausführungsbeispiel weisen die Lagerungseinrichtung und die Befestigungseinrichtung jeweils einen Kupplungsteil auf, welche geometrisch korrespondierend zueinander ausgebildet sind, wobei die Lagerungseinrichtung und die Befestigungseinrichtung mittels der Kupplungsteile formschlüssig aneinander kuppelbar sind, insbesondere in Umfangsrichtung steckbar. Der jeweilige Kupplungsteil kann z.B. als eine Anordnung von Rasthaken ausgebildet sein, wobei die Rasthaken beim Zusammenstecken der Kupplungsteile formschlüssig hinter Hinterschneidungen einrasten und die Kupplungsteile aneinander fixieren können. Die Verrastung kann derart ausgestaltet sein, dass die Kupplungsteile keine Starrkörperbewegung relativ zueinander ausführen können. Am Kupplungsteil kann die Lagerungseinrichtung relativ zur Befestigungseinrichtung ausgerichtet werden und gestützt werden, insbesondere unabhängig von der Anzahl von Windungen.

Gemäß einer Variante ist die Befestigungseinrichtung eingerichtet, die Lagerungseinrichtung in einer vordefinierten Richtung ausgerichtet zu fixieren, insbesondere zu klemmen. Dabei kann die Befestigungseinrichtung eine Durchführung aufweisen, die geometrisch korrespondierend zu einer Außenfläche der Lagerungseinrichtung ausgebildet ist. Hierdurch kann die Lagerungseinrichtung durch die Befestigungseinrichtung hindurchgeführt und mittels der Befestigungseinrichtung in eine gewünschte (Umfangs-)Richtung ausgerichtet werden. Die Durchführung der Befestigungseinrichtung kann sich z.B. in einer Richtung erstrecken, in welcher die Lagerungseinrichtung, insbesondere in einer in Bezug auf eine Spindel der Stativvorrichtung tangentialen Richtung. Hierdurch kann die Lagerungseinrichtung mit einer gewissen Vorspannung in der Soll-Richtung ausgerichtet werden, so dass Gewichtskräfte der Leitung aufgefangen und in die Befestigungseinrichtung weitergeleitet werden können. Beispielsweise weist die Befestigungseinrichtung, insbesondere die Durchführung, einen Kupplungsteil auf, welcher sich über eine Länge von 1mm bis 20mm erstreckt, bevorzugt 3mm bis 15mm, weiter bevorzugt 5mm bis 10mm. Eine solche Länge liefert einen guten Kompromiss zwischen einer in eine bestimmte Richtung aufgebrachten bzw. ausgerichteten Vorspannung und einer nicht zu starken Einschränkung der Elastizität der Lagerungseinrichtung.

Gemäß einem Ausführungsbeispiel weist die Leitungsführung wenigstens einen Abstandshalter auf, welcher eingerichtet ist, einen vorbestimmten axialen Abstand mindestens einer Windung oder eines Segments in Bezug auf eine Komponente der Stativvorrichtung, insbesondere eine Buchse der Stativvorrichtung, oder in Bezug auf einzelne Windungen relativ zueinander sicherzustellen. Hierdurch kann eine vordefinierte Anordnung auch dann erfolgen, wenn besonders viele Leitungen oder besonders schwere Leitungen, z.B. flüssigkeitsführende Leitungen, mittels der Lagerungsanordnung gelagert werden sollen. Der oder die Abstandshalter können auch mittels der Befestigungseinrichtung(en) in einer bestimmten Position gelagert werden, z.B. mittels irgendwelcher Arme oder Streben, die sich um die Spindel herum erstrecken. Bei einer Vielzahl von Anwendungsfällen kann jedoch schätzungsweise auf Abstandshalter verzichtet werden, z.B. dann, wenn die einzelnen Segmente der Lagerungseinrichtung selbstführend oder aufeinander aufliegend ausgestaltet sind, z.B. mittels zumindest abschnittsweise planer/ebener Ober- und Unterseiten.

Der Abstandshalter kann beispielsweise als ein Winkel mit einer bevorzugt ebenen Auflagefläche (Gleitfläche) ausgebildet sein, an welcher eine Leitung gleitend zur Anlage gebracht werden kann. Der Abstandshalter kann ein Befestigungselement für eine Leitung aufweisen, insbesondere einen Clip oder ein anderes form- und/oder kraftschlüssiges Element.

Gemäß einer Variante weist der Abstandshalter eine Anlagefläche zur Anlage/Auflage der Lagerungseinrichtung auf, welche verlagerbar am Abstandshalter gelagert ist, insbesondere in radialer Richtung nach innen oder außen. Beispielsweise weist der Abstandshalter einen in radialer Richtung verlagerbaren Schlitten auf, auf welchem die Lagerungseinrichtung in radialer Richtung bewegungstolerant lagerbar ist. Dies ermöglicht eine reibungsarme Verlagerung in radialer Richtung, insbesondere in Reaktion auf eine Drehbewegung. Gemäß einer Variante ist die Anlagefläche (auch) in Umfangsrichtung verlagerbar am Abstandshalter gelagert.

Gemäß einem Ausführungsbeispiel ist der Abstandshalter in Umfangsrichtung verlagerbar anordenbar, insbesondere konzentrisch drehbar um eine Drehachse, wobei die Leitungsführung bevorzugt eine um die Drehachse verlagerbare Abstützeinrichtung (insbesondere Hülse) aufweist, an welcher der Abstandshalter in Umfangsrichtung verlagerbar anordenbar ist. Bevorzugt sind an der Abstützeinrichtung/Hülse ein oder mehrere Abstandshalter befestigt. Dies hat den Vorteil, dass die Leitungsführung als vorkonfektionierte Vorrichtung unabhängig von einer Buchse oder Spindel der Stativvorrichtung bereitgestellt werden kann. Dies ermöglicht auch ein Nachrüsten der Leitungsführung in einzelnen Drehgelenken oder auch an nachgerüsteten Trägern der Stativvorrichtung.

Gemäß einem Ausführungsbeispiel umfasst die Leitungsführung eine weitere Befestigungseinrichtung (Fixiereinrichtung), mittels welcher die Lagerungseinrichtung an einem vordefinierten Befestigungspunkt in einem Befestigungsabschnitt am anderen Verbindungsbauteil, insbesondere an einer Spindel der Stativvorrichtung, ortsfest anordenbar ist, wobei die weitere Befestigungseinrichtung an der Lagerungseinrichtung fixiert ist, insbesondere mittels einer Steckverbindung. Die weitere Befestigungseinrichtung kann aus einem Oberteil und einem Unterteil gebildet sein, welche bevorzugt aufeinander steckbar ausgebildet sind. Wahlweise kann zusätzlich auch eine Verschraubung vorgesehen sein, insbesondere zwecks erhöhter Festigkeit oder sicherer Verbindung.

Gemäß einem Ausführungsbeispiel umfasst die Leitungsführung einen Einsatz, mittels welchem die wenigstens eine Leitung abdeckbar ist, wobei der Einsatz bevorzugt an einer der Komponenten der Leitungsführung montierbar ist, insbesondere mittels einer Steckverbindung. Der Einsatz kann die Montage erleichtern und die Leitungen führen, insbesondere im Bereich eines Durchlasses einer Spindel. Auch kann der Einsatz eine Lagerfläche für die Lagerungseinrichtung bereitstellen. Bevorzugt ist der Einsatz formschlüssig an der weiteren Befestigungseinrichtung montierbar.

Gemäß einem Ausführungsbeispiel umfasst die Leitungsführung eine Einlage, mittels welcher die Lagerungseinrichtung in einem vordefinierbaren Abstand zu oder getrennt von wenigstens einem der Verbindungsbauteile anordenbar ist. Bevorzugt ist die Einlage als ein ein- oder mehrteiliges Trennschott ausgebildet, welches mit wenigstens einem der Verbindungsbauteile, insbesondere mit der Buchse, kuppelbar ist. Sowohl der Einsatz als auch die Einlage können die Leitungsführung dahingehend weiterbilden, dass die Lagerungseinrichtung in einer vordefinierten Kavität bewegungstolerant ohne das Risiko von Verhaken an Kanten gelagert werden kann. Gemäß einer Variante bilden die weitere Befestigungseinrichtung, der Einsatz und die Einlage zusammen jeweils zumindest annähernd ebene Begrenzungsflächen oder Wandungen einer (Ring-)Kavität, innerhalb welcher die Lagerungseinrichtung bewegungstolerant gelagert ist.

Gemäß einer Variante weist die Leitungsführung mindestens zwei ineinander angeordnete Abstützeinrichtungen auf, wobei eine der Abstützeinrichtungen die andere(n) Abstützeinrichtung(en) in axialer Richtung überragt. Die Abstandshalter können dabei in einer jeweils vorteilhaften Höhenposition an den Abstützeinrichtungen montiert sein, so dass die Lagerungseinrichtung gestützt werden kann. Die Lagerungseinrichtung bildet z.B. drei Windungen, wobei die Leitungsführung wenigstens zwei oder drei Abstandshalter aufweist, wobei jeder Abstandshalter an einer Abstützeinrichtung angeordnet ist, um welche sich die Windungen herum erstrecken. Die Abstandshalter sind dabei z.B. in einem Umfangswinkel im Bereich von 90° bis 180° relativ zueinander angeordnet.

Die Leitungsführung kann ferner einen Distanzring aufweisen, auf welchem wenigstens eine/die Abstützeinrichtung gelagert ist. Mittels des Distanzrings kann eine jeweilige Höhenposition eingestellt werden.

Gemäß einem Ausführungsbeispiel ist die Leitungsführung modulartig aufgebaut und durch eine Baugruppe aus einer Vielzahl aneinander kuppelbarer, insbesondere steckbarer Komponenten gebildet. Bevorzugt ist die Leitungsführung als werkzeuglos vormontierbares, insbesondere zusammensteckbares Modul ausgebildet. Bevorzugt weist die Leitungsführung zusätzlich zu zwei externen Schnittstellen, mittels welchen die Leitungsführung an den Verbindungsbauteilen befestigt werden kann, eine Vielzahl interner steckbarer, formschlüssiger Schnittstellen auf. Bevorzugt ist die Mindestanzahl von Komponenten der Leitungsführung durch folgende Gleichung vorgegeben:

$$\text{Mindestanzahl (N1)} = \text{Anzahl Segmente (nS)} + 2 \text{ Schnittstellenkomponenten}$$

oder für den Fall eines Aufbaus der Komponenten in jeweils zwei Hälften

$$\text{Mindestanzahl (N2)} = 2x \text{ (Anzahl Segmente (nS))} + 2x \text{ (2 Schnittstellenkomponenten)}$$

wobei zusätzlich jeweils optional ein Einsatz und wenigstens eine Einlage/Einlageschale vorgesehen sein können. Hierdurch kann eine besonders flexibel für bestimmte Anwendungsfälle auslegbare Leitungsführung bereitgestellt werden.

Gemäß einem Ausführungsbeispiel besteht die gesamte Leitungsführung oder zumindest die Lagerungseinrichtung und/oder die Befestigungseinrichtung zumindest abschnittsweise aus einem Kunststoff-Material, insbesondere aus einem spritzbaren Thermoplast, insbesondere zumindest teilweise auch aus Silikon. Besonders bevorzugt wird die Leitungsführung aus Polyamid ausgeführt, insbesondere aufgrund guter Festigkeitswerte von Polyamid. Es hat sich gezeigt, dass derartige Materialien für die vorliegende Anwendung besonders geeignet sind, insbesondere um zum einen die gewünschte Verformbarkeit sicherzustellen, zum anderen aber auch eine gewisse Steifigkeit in Hinblick auf eine große Gewichtskraft der Leitungen zu ermöglichen. Durch derartige Materialien kann auch eine komplexe Geometrie der Leitungsführung auf kostengünstige Weise hergestellt werden.

Die zuvor genannte Aufgabe wird auch gelöst durch ein Drehgelenk oder eine Buchse für eine Stativvorrichtung zur Anordnung im Operationssaal, umfassend eine erfindungsgemäße bewegungstolerante Leitungsführung, oder durch eine Stativvorrichtung umfassend das Drehgelenk oder die Buchse jeweils mit der bewegungstoleranten Leitungsführung. Bevorzugt definiert die Buchse zumindest teilweise ein Volumen für einen vordefinierten Bewegungsbereich der Lagerungseinrichtung, insbesondere eine Ringkavität. Die Ringkavität kann einen Radialbauraum bereitstellen, in welchem Relativbewegungen, insbesondere Durchmesseränderungen der Lagerungseinrichtung erfolgen können. Die Lagerungseinrichtung kann dabei z.B. in einem radialen Abstand im Bereich von 0cm bis 3cm zu einer Außenmantelfläche der Spindel angeordnet sein.

Gemäß einer vorteilhaften Variante weist die Buchse einen Befestigungsabschnitt in Form einer Rippe auf, weiter bevorzugt mit einer Stoßfläche oder Radialflanke, an welcher eine Befestigungseinrichtung zur Anlage bringbar ist.

Die zuvor genannte Aufgabe wird auch gelöst durch eine drehtolerante Anordnung mit einer Buchse und mit einer Spindel, wobei die Leitungsführung an einem ersten Befestigungspunkt an der Buchse befestigt und an einem zweiten Befestigungspunkt an der Spindel, wobei die beiden Befestigungspunkte jeweils in einer Ebene verlagerbar sind, welche zumindest annähernd parallel zur anderen Ebene ausgerichtet ist, wobei sich die Lagerungseinrichtung bei einer relativen Drehbewegung durchmesservariabel in radialer Richtung entweder kontrahiert oder aufweitet.

Die zuvor genannte Aufgabe wird auch gelöst durch eine Buchse für eine Stativvorrichtung zur Anordnung im Operationssaal, insbesondere auch zum örtlichen Verlagern einer medizintechnischen Einrichtung im Operationssaal, mit einer bewegungstoleranten Leitungsführung umfassend eine Lagerungseinrichtung zum bewegungstoleranten Lagern wenigstens einer Leitung, insbesondere eines Kabels, um eine Drehachse zwischen zwei relativ zueinander verlagerbaren, insbesondere verdrehbaren Verbindungsbauteilen; und eine an einem Befestigungsabschnitt der Buchse in vordefinierter Relativposition befestigte erste Befestigungseinrichtung zum ortsfesten Anordnen der Lagerungseinrichtung relativ zur Buchse sowie eine an einem Befestigungsabschnitt einer Spindel in vordefinierter Relativposition zumindest drehfest anordenbare zweite Befestigungseinrichtung zum ortsfesten Anordnen der Lagerungseinrichtung relativ zur Spindel; wobei die Lagerungseinrichtung an den Befestigungseinrichtungen fixiert ist und zum drehtoleranten Führen der wenigstens einen Leitung um die Drehachse eingerichtet ist, wobei die Lagerungseinrichtung elastisch verformbar ist und im Durchmesser variabel ist, wobei die Lagerungseinrichtung modulartig aufgebaut ist und durch eine Mehrzahl von bevorzugt baugleichen Segmenten gebildet ist, wobei die Lagerungseinrichtung spiralförmig um die Drehachse angeordnet ist und innerhalb einer von der Buchse und mindestens einer der Befestigungseinrichtungen gebildeten Kavität (vordefinierter Bewegungsbereich) verlagerbar angeordnet ist. Hierdurch ergeben sich eine Vielzahl der bereits zuvor genannten Vorteile.

Die zuvor genannte Aufgabe wird auch gelöst durch eine Stativvorrichtung zur Anordnung im Operationssaal, insbesondere auch zum örtlichen Verlagern einer medizintechnischen Einrichtung im Operationssaal, umfassend eine erfindungsgemäße bewegungstolerante Leitungsführung, wobei die Stativvorrichtung ein erstes Verbindungsbauteil in Form einer Spindel sowie ein zweites Verbindungsbauteil in Form einer Buchse aufweist, wobei die Spindel und die Buchse jeweils eine Befestigungskupplung oder einen Befestigungsabschnitt aufweisen, an welcher/welchem die Lagerungseinrichtung sowohl an der Spindel als auch an der Buchse befestigt ist und durchmesservariabel um die Spindel gelagert ist. Die relative Bewegung der Lagerungseinrichtung in axialer und radialer Richtung kann dabei genau vorbestimmt werden, insbesondere in Bezug auf einen bestimmten (eingestellten) Drehwinkel. Eine Befestigung an der Buchse kann dabei z.B. mittels Schrauben in einer vordefinierten Position erfolgen (Festlager). Eine Befestigung an der Spindel kann dabei bevorzugt z.B. mittels einer Verdrehsicherung erfolgen, welche eine axiale Verlagerung zulässt, also z.B. eine Nut-Feder-Verbindung. Dies liefert Vorteile insbesondere in Hinblick auf unterschiedliche Axialpositionen an der Spindel oder in Hinblick auf eine Mehrzahl von Buchsen, welche übereinander an der Spindel angeordnet werden sollen. Eine Nut-Feder-Verbindung ist vorteilhaft für die Montage, da die jeweilige Buchse nur aufgeschoben werden braucht.

Die Stativvorrichtung kann dabei ferner umfassen: ein Tragsystem umfassend eine Montageeinrichtung zum ortsfesten Positionieren der Stativvorrichtung im Operationssaal, insbesondere an einer Raumdecke, und wenigstens einen in einem Lager und/oder Gelenk, insbesondere Drehgelenk, relativ zur Montageeinrichtung bewegbar gelagerten Tragarm.

Die Stativvorrichtung umfasst bevorzugt auch einen oder mehrere Anschläge oder Verdrehsicherungen zur Drehbegrenzung, womit sichergestellt werden kann, dass die Leitungsführung nicht über einen gewissen Schwellwert einer maximalen Relativbewegung verformt wird.

Gemäß einer Variante ist die Leitungsführung an einem ersten Befestigungspunkt an der Buchse befestigt und an einem zweiten Befestigungspunkt an der Spindel, wobei die beiden Befestigungspunkte jeweils in einer Ebene verlagerbar sind, welche zumindest annähernd parallel zur anderen Ebene ausgerichtet ist, wobei sich die Lagerungseinrichtung bei einer relativen Drehbewegung in radialer Richtung entweder kontrahiert oder aufweitet.

Gemäß einer Variante ist die radiale Erstreckung des Querschnittsprofils der Lagerungseinrichtung größer als die Hälfte des vordefinierten Bewegungsbereichs, d.h. größer als die Hälfte des Bewegungsfreiraums der Lagerungseinrichtung in radialer Richtung. Dies kann sicherstellen, dass zwei Windungen nicht nebeneinander gebildet werden können, sondern jedenfalls übereinander und schraubenförmig angeordnet bleiben. Die Windungen können sich dann nicht ineinander verkeilen, sondern bleiben in axialer Richtung in Reihe angeordnet.

Die Spindel kann wenigstens eine Durchführung für eine Leitung aufweisen, wobei sich die Durchführung bevorzugt in axialer Richtung erstreckt und auf einem Teilkreis angeordnet ist, welcher einem Teilkreis der Lagerungseinrichtung entspricht, wenn die Lagerungseinrichtung unverformt ist, also in radialer Richtung weder kontrahiert noch expandiert ist.

Gemäß einer Variante weist die Lagerungseinrichtung ein freies Ende auf, welches in Umfangsrichtung in einem Abstand zur Durchführung angeordnet ist. Die Lagerungseinrichtung ist dann mittels nur an einem Ende und mit nur einer Befestigungseinrichtung fixiert. Hierdurch kann eine relative Bewegung der Lagerungseinrichtung erfolgen, ohne dass die Leitung infolgedessen innerhalb der Durchführung verlagert wird. Hierdurch kann ein Reiben der Leitung innerhalb der Durchführung vermieden werden. Bevorzugt entspricht der Abstand in Umfangsrichtung einem Kreisbogen mit einer Erstreckung über 10° bis 90°, weiter bevorzugt 20° bis 60°, besonders bevorzugt 30° bis 45°. Ein solcher Abstand liefert einen guten Kompromiss aus Bewegungstoleranz und definierter, insbesondere auch platzsparender, Anordnung der Leitung.

Die zuvor genannte Aufgabe wird auch gelöst durch Verwendung einer erfindungsgemäßen bewegungstoleranten Leitungsführung an einer Stativvorrichtung eingerichtet zur Anordnung im Operationssaal, insbesondere auch zum örtlichen Verlagern einer medizintechnischen Einrichtung im Operationssaal, insbesondere einer erfindungsgemäßen bewegungstoleranten Leitungsführung, wobei wenigstens eine Leitung in einer Lagerungseinrichtung der Leitungsführung bewegungstolerant und durchmesservariable zwischen zwei relativ zueinander verlagerbaren Befestigungspunkten gelagert und um eine Drehachse in einer Buchse geführt ist, wobei die Leitungsführung mittels einer Befestigungseinrichtung an der Buchse befestigt ist.

In den nachfolgenden Zeichnungsfiguren wird die Erfindung anhand von Ausführungsbeispielen näher erläutert. Die in den jeweiligen Ausführungsbeispielen gezeigten Varianten sind dabei miteinander kombinierbar, z.B. die gezeigte Rippe der Buchse oder der Haken der Befestigungseinrichtung. Es zeigen:

Figur 1A, 1B, 1C      in unterschiedlichen Ansichten eine bewegungstolerante Leitungsführung gemäß einem Ausführungsbeispiel der Erfindung;

Figur 2A, 2B, 2C, 2D      in unterschiedlichen Ansichten ein Segment einer bewegungstoleranten Leitungsführung gemäß einem Ausführungsbeispiel der Erfindung;

Figur 3      in einer perspektivischen Ansicht von unten ein Oberteil einer Befestigungseinrichtung einer bewegungstoleranten Leitungsführung gemäß einem Ausführungsbeispiel der Erfindung;

Figur 4      in einer perspektivischen Ansicht von oben ein Unterteil der Befestigungseinrichtung;

Figur 5      in einer perspektivischen Ansicht von oben ein Unterteil einer weiteren Befestigungseinrichtung (Fixiereinrichtung) einer bewegungstoleranten Leitungsführung gemäß einem Ausführungsbeispiel der Erfindung;

| Figur 6 | in einer perspektivischen Ansicht von oben ein Oberteil der Fixiereinrichtung; |
|---|---|
| Figur 7 | in einer perspektivischen Ansicht von unten einen Einsatz eingerichtet zur Verbindung mit der Fixiereinrichtung; |
| Figur 8A, 8B | in unterschiedlichen perspektivischen Ansichten die Fixiereinrichtung ohne und mit Einsatz; |
| Figur 9A, 9B | in unterschiedlichen perspektivischen Schnittansichten eine bewegungstolerante Leitungsführung gemäß einem Ausführungsbeispiel der Erfindung in einem montierten Zustand; |
| Figur 10A, 10B | jeweils in perspektivischer Ansicht eine Einlageschale einer bewegungstoleranten Leitungsführung gemäß einem Ausführungsbeispiel der Erfindung; |
| Figur 11 | in einer Seitenansicht eine bewegungstolerante Leitungsführung gemäß einem Ausführungsbeispiel der Erfindung in einem montierten Zustand mit Einlage; |
| Figur 12 | in einer perspektivischen Draufsicht die in der Figur 11 gezeigte Anordnung; |
| Figur 13 | in einer perspektivischen Seitenansicht einen Teil einer Stativvorrichtung mit einer vollständig integrierten bewegungstoleranten Leitungsführung gemäß einem Ausführungsbeispiel der Erfindung; |
| Figur 14 | in perspektivischer Ansicht eine Buchse für eine bewegungstolerante Leitungsführung gemäß einem Ausführungsbeispiel der Erfindung; |
| Figur 15 | in perspektivische Draufsicht eine Befestigungseinrichtung, eine Lagerungseinrichtung und eine weitere Befestigungseinrichtung einer bewegungstoleranten Leitungsführung gemäß einem Ausführungsbeispiel der Erfindung; und |
| Figur 16 | in perspektivischer Ansicht eine weitere Befestigungseinrichtung für eine bewegungstolerante Leitungsführung gemäß einem Ausführungsbeispiel der Erfindung. |

Im Zusammenhang mit der Beschreibung der folgenden Figuren wird bei Bezugszeichen, falls sie in einzelnen Figuren nicht explizit erläutert werden, auf die weiteren Figuren verwiesen.

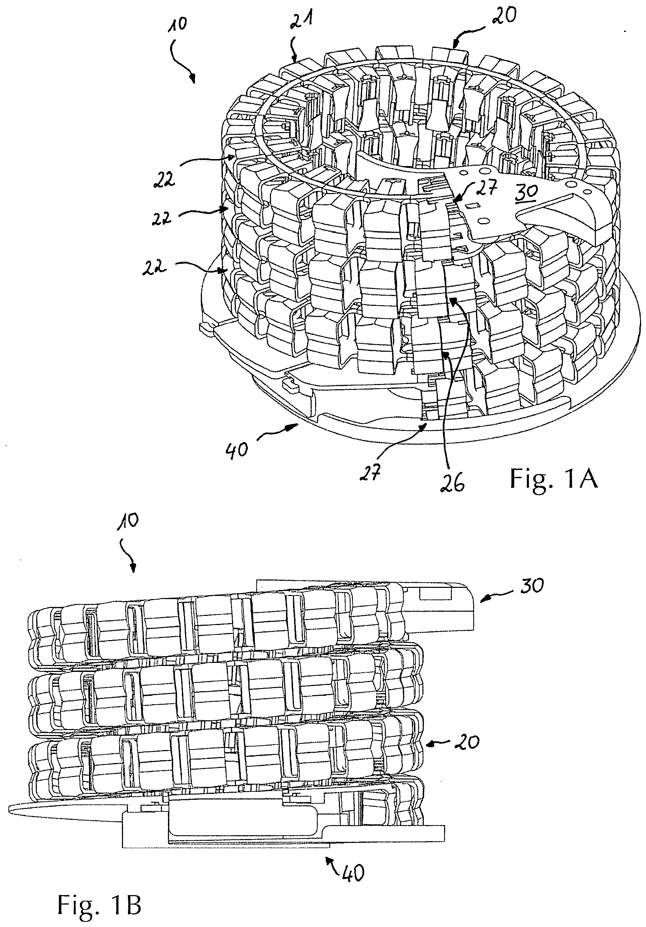

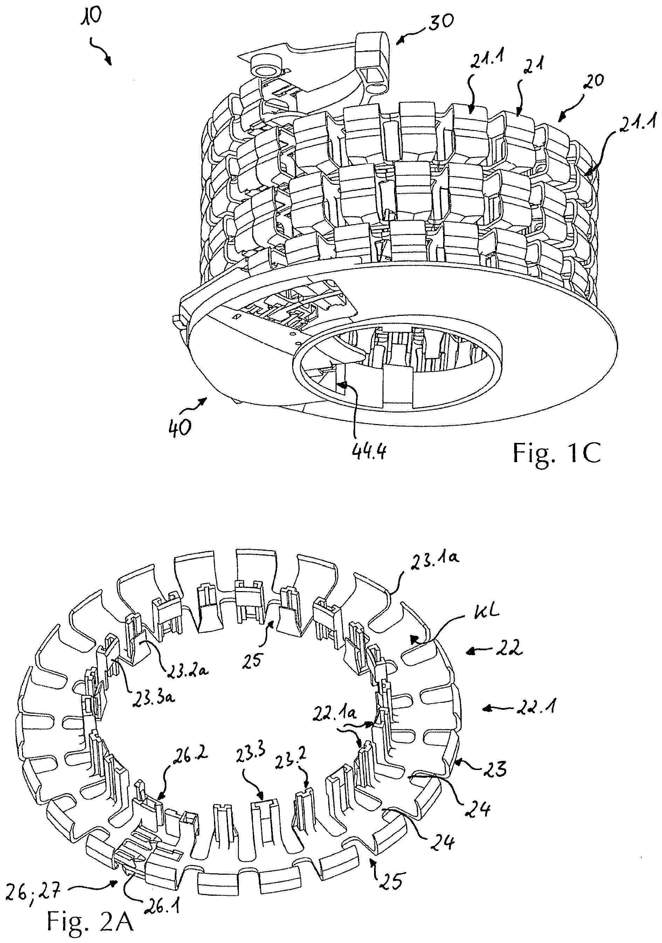

In den Figuren 1A, 1B und 1C ist eine bewegungstolerante Leitungsführung 10 mit einer Lagerungseinrichtung 20 gezeigt, welche drei Segmente 21 oder zwischenmontierte Segmentabschnitte 22 aufweist. Die Segmente 21 sind jeweils in Kupplungsabschnitten 26 aneinander gesteckt. Die Lagerungseinrichtung 20 ist an zwei freien Enden jeweils mittels eines Kupplungsteils 27 mit einer Befestigungseinrichtung 30, 40 verbunden. Das jeweilige Segment 21 weist an einem radial außen liegenden Seitenabschnitt einen Zugang oder Längsschlitz 21.1 auf.

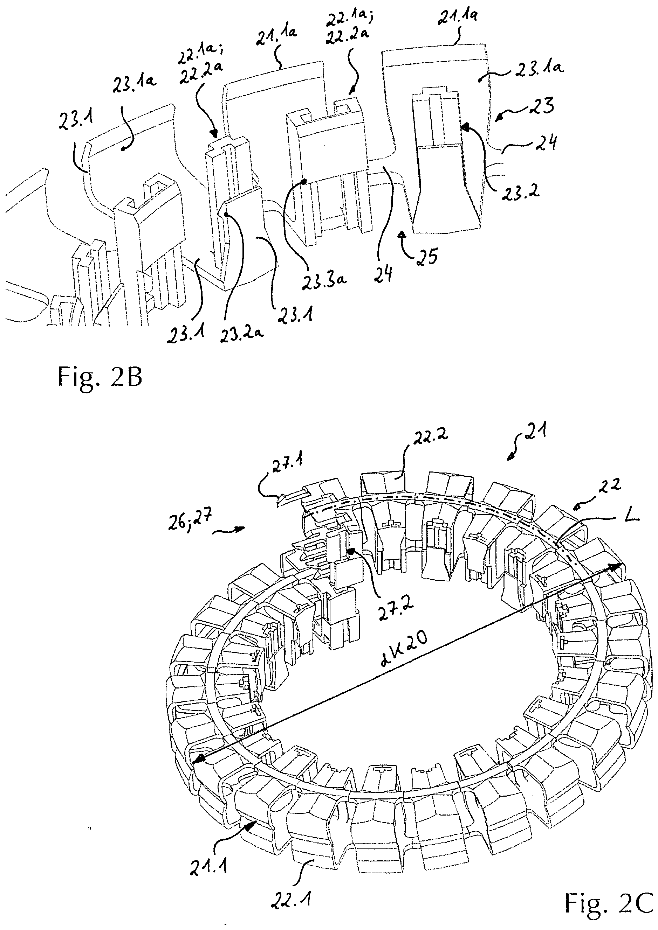

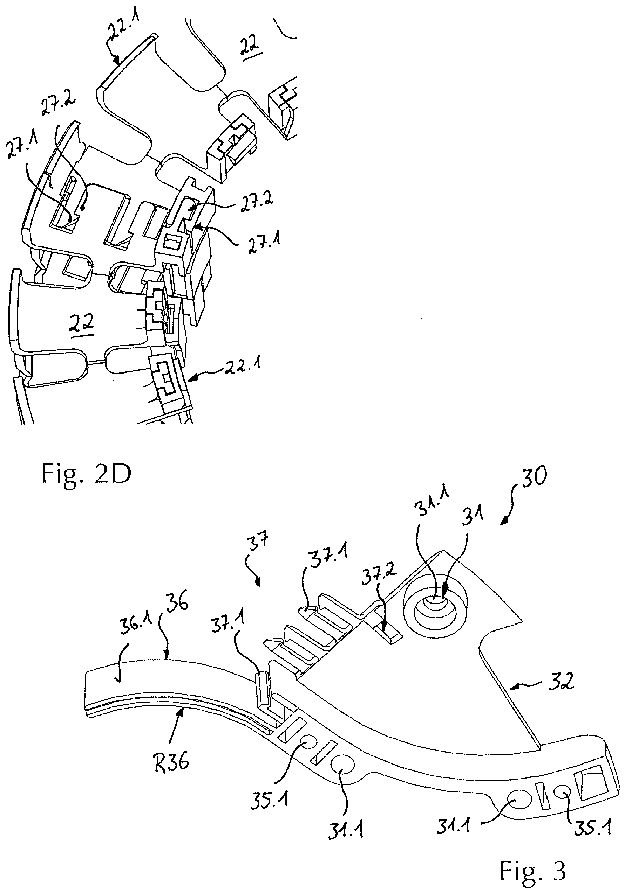

In den Figuren 2A, 2B, 2C und 2D sind Details eines jeweiligen Segmentabschnitts 22 gezeigt. Der Segmentabschnitt 22 ist aus zwei Hälften gebildet, von denen in Figur 2A eine untere Hälfte 22.1 gezeigt ist. Jede Hälfte besteht aus einer Vielzahl von Wirbeln oder Gliedern 23, welche mittels Verbindungsabschnitten 24 miteinander verbunden und relativ zueinander bewegbar sind. Die Glieder/Wirbel 23 weisen vorzugsweise ein Querschnittsprofil mit drei Seitenabschnitten 23.1 auf. Die Hälfte 22.1 ist hierbei einstückig ausgebildet. Vorteilhaft weisen die Glieder/Wirbel 23 ein U-förmiges Querschnittsprofil mit wenigstens einem an einem oder beiden freien Enden des U-Profils in axialer Richtung abstehenden Lateralabschnitt 23.1a auf. Die Verbindungsabschnitte 24 sind in etwa mittig in Bezug auf eine radiale Erstreckung des jeweiligen Gliedes angeordnet. Die Verbindungsabschnitte 24 sind elastisch verformbar. Hierzu können die Verbindungsabschnitte 24 aus einem Material mit einer besonders hohen Flexibilität gebildet sein, und/oder nur eine geringe Breite aufweisen, so dass auch ein vergleichsweise steifes Material elastisch verformbar ist. Ein jeweiliger Verbindungsabschnitt 24 ist bevorzugt durch einen schmalen Steg gebildet, welcher aus demselben Material beseht wie die weiteren Abschnitte des Segmentabschnitts 22. Zwei benachbarte Glieder 23 sind jeweils über zwei Stege/Verbindungsabschnitte 24 miteinander verbunden, insbesondere an einer Oberseite und an einer Unterseite des Segments 21. Dies kann sicherstellen, dass sich das Segment 21 bzw. die Lagerungseinrichtung 20 nicht verwindet oder tordiert. Die Verbindungsabschnitte 24 sind entlang einer gemeinsamen Längsachse angeordnet und bilden eine Art durchgehende Wirbelsäule, also eine Art vergleichsweise struktursteifes Rückgrat der Lagerungseinrichtung 20. An einer Außenseite oder Innenseite sind hingegen keine Stege vorgesehen, um maximale Bewegungstoleranz zu ermöglichen. Mit anderen Worten ist jedes Glied 23 um eine Achse zumindest annähernd parallel zur Drehachse schwenkbar angeordnet.

Innen und außen von den Verbindungsabschnitten 24 sind Aussparungen 25 gebildet. Die Größe der Aussparungen 25 kann das Ausmaß der zulässigen Bewegung definieren. Die Aussparungen 25 stellen sicher, dass die Glieder 23 relativ zueinander einen großen Bewegungsfreiheitsgrad aufweisen. Hierdurch können die Glieder 23 relativ zueinander um die Drehachse derart angeordnet werden, dass sich wahlweise ein engerer oder weiterer Krümmungsradius des Segments 21 ergibt. Jedes Glied 23 weist drei Seitenabschnitte 23.1 auf, welche einen Leitungskanal KL umgrenzen und sich jeweils zumindest annähernd in einer Ebene erstrecken, wobei einer der Seitenabschnitte ein radial außen liegender Lateralabschnitt 23.1a ist, welcher den Leitungskanal KL radial außen begrenzt.

In Figur 2A ist gezeigt, dass die Hälfte 22.1, 22.2 jeweils einen Kupplungsabschnitt 22.1a, 22.2a aufweist, an welchem die andere Hälfte 22.1, 22.2 mit der Hälfte 22.1, 22.2 verbunden werden kann. Der Kupplungsabschnitt 22.1a, 22.2a wird dabei durch jedes einzelne Glied 23 gebildet, nämlich zum einen durch Stifte 23.2 und zum anderen durch Stiftaufnahmen 23.3, welche jeweils Rastmittel 23.2a, 23.3a aufweisen. Der Kupplungsabschnitt 22.1 a, 22.2a ist an einer Innenseite der Lagerungseinrichtung 20 vorgesehen. Die Stifte 23.2 und Stiftaufnahmen 23.3 sind abwechselnd umlaufend in Reihe angeordnet. Auf diese Weise kann mittels des Kupplungsabschnitts 22.1a eine belastbare, robuste Steckverbindung bereitgestellt werden. Die jeweiligen Hälften 22.1, 22.2 können als Gleichteile ausgeführt sein.

In Figur 2A ist ferner gezeigt, dass die Hälfte 22.1 an beiden freien Enden einen Kupplungsabschnitt 26 aufweist. Am ersten freien Ende ist ein erster Kupplungsabschnitt 26.1 ausgebildet, und am zweiten freien Ende ist ein zweiter Kupplungsabschnitt 26.2 ausgebildet. Die beiden Kupplungsabschnitte 26.1, 26.2 sind komplementär zueinander oder geometrisch korrespondierend zueinander ausgebildet, so dass der erste Kupplungsabschnitt 26.1 eines ersten Segmentabschnitts 22 in den zweiten Kupplungsabschnitt 26.2 eines zweiten Segmentabschnitts 22 gesteckt werden kann. Benachbart zum ersten Kupplungsabschnitt 26.1 ist ein Stift 23.2 angeordnet, und benachbart zum zweiten Kupplungsabschnitt 26.2 ist ein2 Stiftaufnahme 23.3 angeordnet. Bei dieser Ausgestaltung können die Hälften 22.1, 22.2 auf einfache Weise als Gleichteile für einen modulartigen Aufbau der Lagerungseinrichtung 20 verwendet werden. Der jeweilige Kupplungsabschnitt 26 kann dabei alternativ auch einen Kupplungsteil 27 zur Verbindung mit einer Befestigungseinrichtung bilden.

In Figur 2B ist der Aufbau eines einzelnen Gliedes 23 einer der Hälften 22.1, 2.2 im Detail gezeigt. Der Kupplungsabschnitt 22.1a, 22.2a ist durch Stifte 23.2 mit T-förmigem Querschnittsprofil und Stiftaufnahmen 23.3 jeweils mit einer Aufnahmekavität mit entsprechendem, geometrisch korrespondierendem Querschnittsprofil gebildet. Die Stifte 23.2 und Stiftaufnahmen 23.3 sind jeweils am innenliegenden Seitenabschnitt 23.1 angeordnet. Die Stifte 23.2 weisen Rastmittel 23.2a jeweils in Form von elastisch vorspannbaren Rasthaken auf, und die Stiftaufnahmen 23.3 weisen Rastmittel 23.3a jeweils in Form von Absätzen oder Hinterschneidungen auf, welche geometrisch korrespondierend zu den Rasthaken ausgebildet sind. Eine Anlagekante 21.1a am Lateralabschnitt 23.1a kann sicherstellen, dass ein zwischen zwei Hälften gebildeter Zugang oder Längsschlitz abgeschottet werden kann.

In Figur 2C ist gezeigt, wie die Hälften 22.1, 22.2 aufeinander steckbar sind. Das gezeigte Segment 21 der Lagerungseinrichtung 20 erstreckt sich entlang einer Längsachse L und ist spiralförmig angeordnet. Die Lagerungseinrichtung bzw. ein jeweiliges Segment 21 weist einen (Außen-)Durchmesser dK20 auf, welcher variabel ist und mindestens so groß sein kann wie der Durchmesser einer Ringkavität, innerhalb welcher eine Relativbewegung der Lagerungseinrichtung erfolgen kann/soll. Der an mindestens einem freien Ende des Segmentabschnitts 22 vorgesehene Kupplungsteil 27 weist erste Rastmittel 27.1 in Form von elastisch vorspannbaren Rasthaken sowie zweite Rastmittel 27.2 in Form von Absätzen oder Hinterschneidungen auf, welche geometrisch korrespondierend zu den entsprechenden Rasthaken ausgebildet sind.

In Figur 2D ist gezeigt, wie die Hälften 22.1 benachbarter Segmentabschnitte 22 in Reihe aneinander steckbar sind.

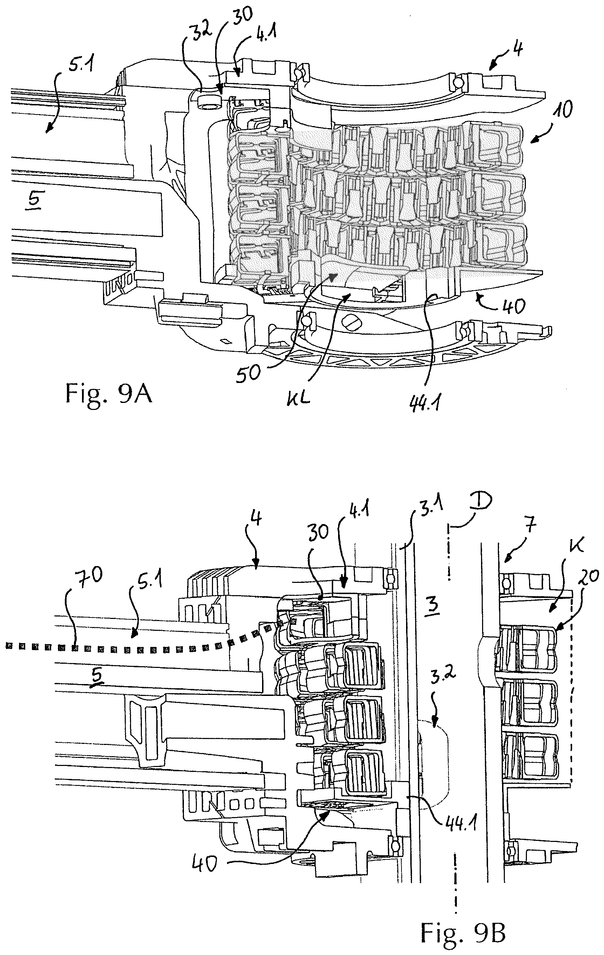

In Figur 3 ist ein Oberteil 32 der Befestigungseinrichtung 30 gezeigt, welches mittels eines Befestigungsabschnitts 31 umfassend Befestigungsmittel 31.1, insbesondere Durchgangsbohrungen, an einem der Verbindungsbauteile (nicht gezeigt), insbesondere an der Buchse (vgl. Fig. 9A), montierbar ist. Beispielsweise können Schrauben verwendet werden, um die Befestigungseinrichtung 30 an der Buchse festzuschrauben.

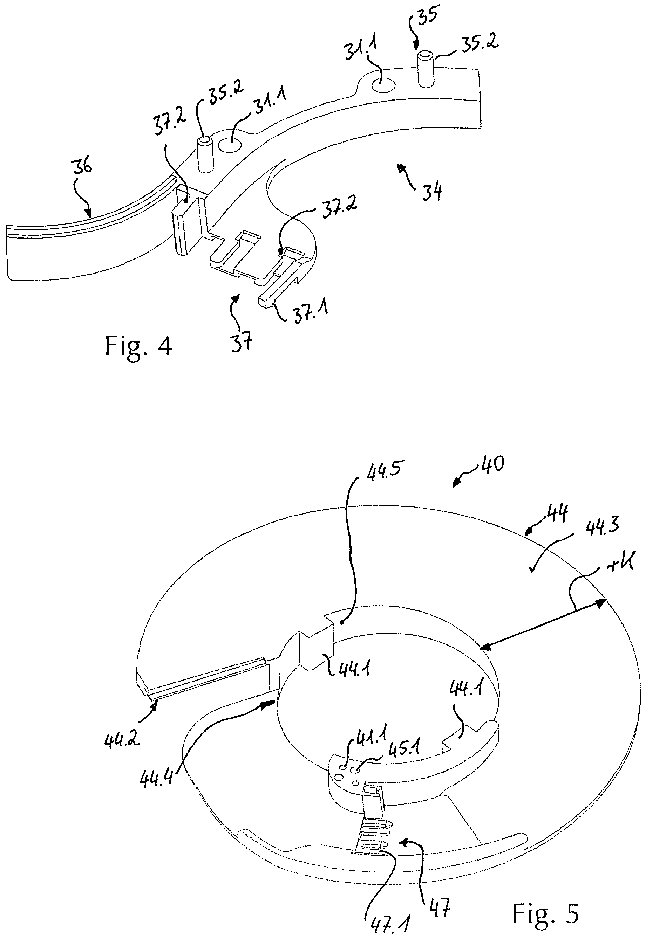

Das Oberteil 32 weist eine in Umfangsrichtung hervorstehende Zunge 36 auf, welche eine nach innen zur Drehachse gekrümmte Anlagefläche 36.1 aufweist, an welcher die Lagerungseinrichtung 20 zur Anlage kommen kann, insbesondere mit einem dem jeweiligen nach innen weisenden Seitenabschnitt 23.1 des an der Befestigungseinrichtung 30 befestigten Segments 21. Die Zunge 36 weist einen Krümmungsradius R36 auf, welcher einen Mindest-Krümmungsradius der Lagerungseinrichtung 20 vorgibt. Hierdurch kann sichergestellt werden, dass die Steckverbindung zwischen der Lagerungseinrichtung 20 und der Befestigungseinrichtung 30 nicht überlastet wird, und dass die Lagerungseinrichtung 20 nur bis zu einem gewissen Grade gekrümmt wird. Das Oberteil 32 bildet zusammen mit dem in Fig. 4 gezeigten Unterteil 34 die Befestigungseinrichtung 30.

In Figur 4 ein Unterteil 34 der Befestigungseinrichtung 30 gezeigt, welches zusammen mit dem Oberteil 32 die Zunge 36 bildet. Das Oberteil 32 und das Unterteil 34 sind mittels einer Steckverbindung 35 umfassend Stiftaufnahmen 35.1 am Oberteil 32 und Stifte 35.2 am Unterteil 34 aufeinander steckbar.

In den Figuren 3 und 4 ist gezeigt, dass der Kupplungsteil 37 erste Rastmittel 37.1 in Form von elastisch vorspannbaren Rasthaken sowie zweite Rastmittel 37.2 in Form von Absätzen oder Hinterschneidungen aufweist, welche jeweils geometrisch korrespondierend zu den entsprechenden Rasthaken und Absätzen des Segmentabschnitts ausgebildet sind.

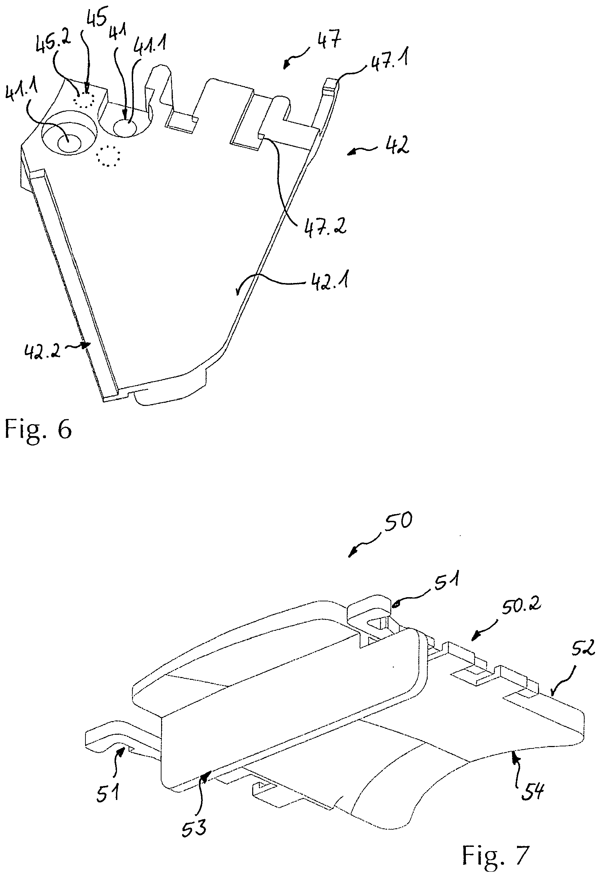

In Figur 5 eine weitere Befestigungseinrichtung 40 gezeigt, welche zur verdrehsicheren Montage am weiteren Verbindungsbauteil (nicht gezeigt), insbesondere an der Spindel (vgl. Fig. 9A) ausgebildet ist. Die weitere Befestigungseinrichtung 40 kann einen Übergang mit vordefiniertem Krümmungsradius zwischen der Lagerungseinrichtung 20 und der Spindel sicherstellen. Die verdrehsichere Anordnung/Lagerung kann mittels Zapfen oder Federn 44.1 sichergestellt werden, welche in eine entsprechende Nut am Verbindungsbauteil eingreifen. Im Gegensatz zur Befestigungseinrichtung 30 ist eine Befestigung in einer vordefinierten Relativposition am Verbindungsbauteil nicht vorgesehen. Die Befestigungseinrichtung 40 weist ein Unterteil 44 und ein Oberteil 42 (vgl. Fig. 6) auf. Das Unterteil 44 ist als spiralförmige Ringscheibe ausgebildet und erstreckt sich um zumindest annähernd 360°, entsprechend einer Windung. Das Unterteil 44 weist eine Auflagefläche 44.3 auf, auf welcher ein Segment aufliegen kann. Die Auflagefläche 44.3 erstreckt sich in radialer Richtung über eine Breite rK, die größer ist als die radiale Breite der Lagerungseinrichtung 20. Die Breite rK definiert dabei die Erstreckung einer Ringkavität, innerhalb welcher eine Relativbewegung der Lagerungseinrichtung 20 in radialer Richtung erfolgen kann. Die Auflagefläche 44.3 bildet bevorzugt eine Gleitpaarung mit der Lagerungseinrichtung 20 oder weist zumindest einen niedrigen Reibungskoeffizienten auf oder ist als Gleitlagerfläche ausgebildet. Die Auflagefläche 44.3 kann z.B. aus Polyamid ausgebildet sein.

Das Unterteil 44 weist einen Durchlass 44.4 nach radial innen auf, welcher durch eine Wandung 44.5 hindurch führt. Der Durchlass 44.4 ist eine in der Wandung 44.5 gebildete Aussparung. Durch den Durchlass 44.4 können Leitungen zu einer Spindel geführt werden.

In Figur 6 ist das Oberteil 42 der weiteren Befestigungseinrichtung 40 gezeigt, welches zusammen mit dem Unterteil 44 eine Schnittstelle (Kupplungsteil 47) zur Lagerungseinrichtung 20 bildet. Das Oberteil 42 und das Unterteil 44 sind mittels einer Steckverbindung 45 umfassend Stiftaufnahmen 45.1 am Unterteil 44 und Stifte 45.2 (gestrichelt angedeutet) am Oberteil 42 aufeinander steckbar. Das Oberteil 42 weist eine ebene Oberseite 42.1 auf, auf welcher ein Segment aufliegen kann. Die Oberseite 42.1 ist zumindest annähernd in derselben Ebene anordenbar wie die Auflagefläche 44.3. Das Oberteil 42 weist ebenso wie das Unterteil 44 eine Führungskante 42.2, 44.2 auf, mittels welchen ein Einsatz 50 (vgl. Fig. 7) an die Befestigungseinrichtung 40 kuppelbar ist.

Das Oberteil 42 und das Unterteil 44 sind mittels einer Steckverbindung 45 umfassend Stiftaufnahmen 45.1 am Oberteil 42 und Stifte 45.2 am Unterteil 44 aufeinander steckbar. Zusätzlich kann mittels eines Sicherungsabschnitts 41 umfassend Sicherungsmittel 41.1, insbesondere (Gewinde-)Durchgangsbohrungen, eine Sicherung der Position der Teile 42, 44 relativ zueinander erfolgen, insbesondere mittels Schrauben.

In den Figuren 5 und 6 ist gezeigt, dass der Kupplungsteil 47 erste Rastmittel 47.1 in Form von elastisch vorspannbaren Rasthaken sowie zweite Rastmittel 47.2 in Form von Absätzen oder Hinterschneidungen aufweist, welche jeweils geometrisch korrespondierend zu den entsprechenden Rasthaken und Absätzen des Segmentabschnitts ausgebildet sind.

In Figur 7 zeigt einen Einsatz 50 in Form einer Abdeckung oder eines Deckels zum Abdecken von verlegten Leitungen. Der Einsatz 50 weist zwei Führungsprofile 50.2 auf, welche jeweils geometrisch korrespondierend zu den Führungskanten 42.2, 44.2 ausgebildet sind. Der Einsatz 50 weist eine ebene Oberseite 52 auf, die zumindest annähernd in derselben Ebene wie die Auflagefläche 44.3 bzw. die Oberseite 42.1. Ferner weist der Einsatz 50 Rasthaken 51 auf, welche eingerichtet sind, den Einsatz 50 an der Befestigungseinrichtung 40 zu sichern, und welche geometrisch korrespondierend zu entsprechenden Rastmitteln der Befestigungseinrichtung 40 ausgebildet sind. Der Einsatz 50 weist ferner ein radial außen angeordnetes Radialschott 53 auf, mittels welchem ein von der Befestigungseinrichtung 40 gebildeter Leitungskanal KL abgeschottet werden kann. Der Einsatz 50 wird bevorzugt erst nach dem Verlegen von Leitungen montiert. Dank des Einsatzes 50 bleibt die weitere Befestigungseinrichtung 40 bzw. die Lagerungseinrichtung 20 gut zugänglich. Der Einsatz 50 weist eine nach radial innen hervorstehende Lasche 54 auf, welche beispielsweise in einen Durchlass der Spindel eingreifen kann und die Leitung(en) durch den Durchlass hindurch führen kann, insbesondere ohne das Risiko, dass die Leitungen am Durchlass verletzt werden.

Die Leitungen werden in vielen Anwendungsfällen bevorzugt nach oben innerhalb der Spindel weitergeführt, insbesondere bei Deckenstativen. Die Lasche 54 kann dabei einen Sicherheitsabstand zwischen den in die Spindel geführten Leitungsabschnitten und weiteren Windungen der Lagerungseinrichtung schaffen. Auf der Lasche kann dabei wahlweise auch eine Erhöhung vorgesehen/ausgebildet sein, welche den Außenradius der Spindel aufweist und somit die Form der Spindel nachbildet. Hierdurch kann ein Verhaken der Lagerungseinrichtung am Durchlass bzw. Spindelfenster 3.2 vermieden werden.

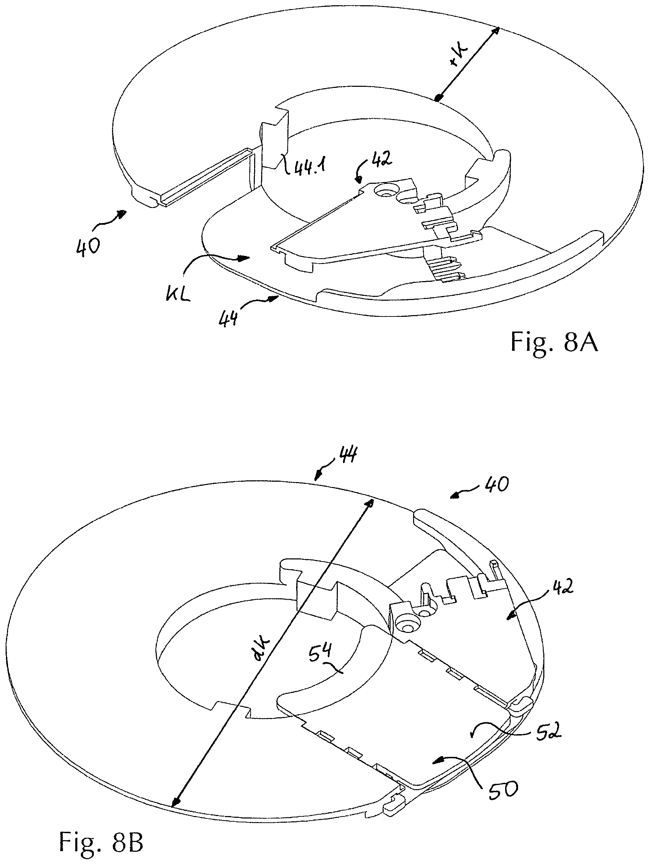

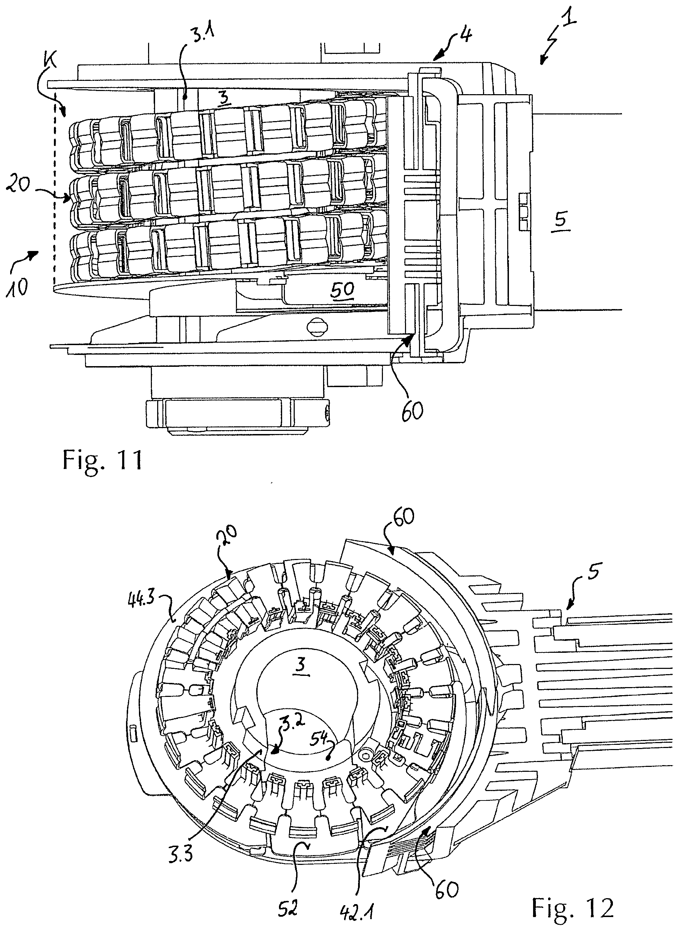

In den Figuren 8A und 8B ist die weitere Befestigungseinrichtung 40 in zusammengebautem Zustand mit dem Einsatz 50 gezeigt. Die scheibenartige Befestigungseinrichtung 40 ist insbesondere deshalb mehrteilig aufgebaut, um eine einfache Austauschbarkeit von Systemkomponenten zu ermöglichen. Die Befestigungseinrichtung 40 kann zusammen mit dem Einsatz 50 einen Leitungskanal KL zum Definieren eines Pfades zum Verlegen der Leitung(en) bilden, wie in Figur 9A erkennbar. Die Befestigungseinrichtung 40 weist einen Durchmesser dK auf, welcher einen Durchmesser der Ringkavität K (vgl. Fig. 11) definiert, innerhalb welcher eine Relativbewegung der Lagerungseinrichtung erfolgen kann/soll. Der Innenradius des Leitungskanals KL kann dabei z.B. ca. 15 mm betragen, der Außenradius z.B. ca. 40 mm, und ein Umlenkungswinkel z.B. ca. 90°.

In der Figur 9A ist ein Verbindungsbauteil in Form einer Buchse 4 gezeigt, an welcher in einem Befestigungsabschnitt 4.1 die Befestigungseinrichtung 30 der Leitungsführung 10 befestigt ist. Die Buchse 4 ist drehbar um eine in Fig. 9B gezeigte Hohlspindel 3 gelagert, welche eine Drehachse D definiert. Die Buchse 4 ist dabei ein Teil eines Drehgelenks 7 oder bildet dieses Drehgelenk 7, insbesondere zusammen mit der Spindel 4. Hierzu kann die Buchse 4 wenigstens ein Lager aufweisen, z.B. ein Kugellager. Die Buchse 4 ist drehfest mit einem Tragarm 5 verbunden. Die Befestigungseinrichtung 30 weist zu einem Kabelkanal 5.1 des Tragarms, in welcher eine oder mehrere Leitungen verlegt sein können. In einem unteren Bereich der Leitungsführung 10 ist der durch die weitere Befestigungseinrichtung 40 gebildete Leitungskanal KL erkennbar.

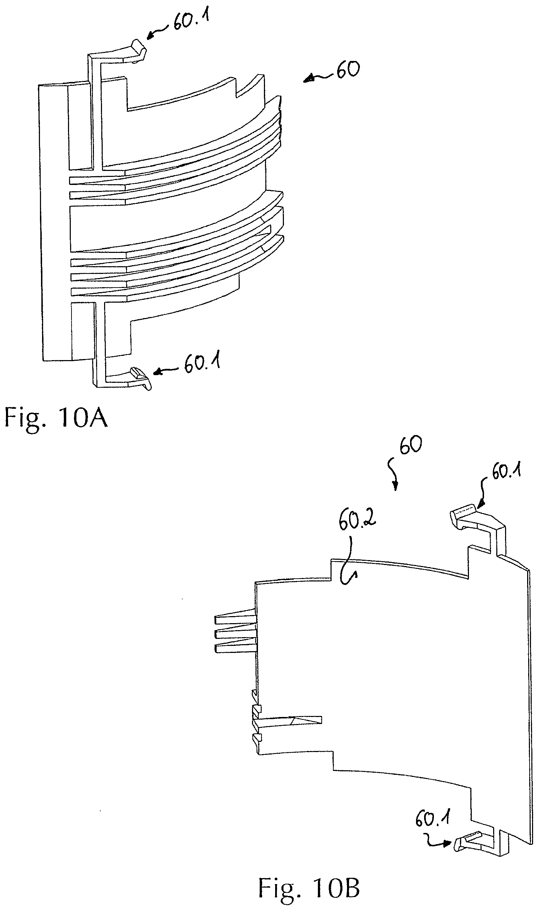

In Figur 9B ist eine Leitung 70 angedeutet, welche im Kabelkanal 5.1 verlegt ist und durch die Befestigungseinrichtung 30 hindurch in die Lagerungseinrichtung 20 geführt wird. Dabei können die Leitungen von einem unteren Ende der Lagerungseinrichtung, d.h. ausgehend von der weiteren Befestigungseinrichtung 40, durch einen Durchlass 3.2 und innerhalb der Spindel 3 nach oben oder unten weitergeführt werden, insbesondere zu einem Deckenflansch. Wie bereits beschrieben, ist die Befestigungseinrichtung 30 an der Buchse 4 befestigt und an der Spindel 3 verdrehsicher gelagert, indem die Feder(n) 44.1 in die Nut(en) 3.1 eingreift/eingreifen. Wird nun der Tragarm 5 relativ zur Spindel 3 verschwenkt, so verlagert sich die Drehposition des Befestigungsabschnitts 4.1 relativ zur weiteren Befestigungseinrichtung 40. Hierdurch wird die Lagerungseinrichtung 20 gestaucht oder gestreckt, und dabei vergrößert oder verkleinert sich deren Krümmungsradius. Die Lagerungseinrichtung 20 weitet sich in radialer Richtung auf oder zieht sich in radialer Richtung zusammen. Hierzu steht der Lagerungseinrichtung ein vordefinierter Bewegungsbereich K zur Verfügung, insbesondere eine zwischen der Außenmantelfläche der Spindel 3 und einer Innenmantelfläche der Buchse 4 oder einer Einlage (vgl. Fig. 10A, 10B) gebildeten Ringkavität.

In den Figuren 10A, 10B ist eine Einlage 60 in Form einer Schale oder eines Radialschotts gezeigt, welche zwischen einer Innenfläche der Buchse und der Lagerungseinrichtung anordenbar ist. Die Einlage 60 weist eine Höhe auf, welche zumindest annähernd der Höhe der Buchse entspricht. Oben und unten an der Einlage 60 sind Rasthaken 61 angeordnet, welche eingerichtet sind, die Einlage 60 formschlüssig und/oder kraftschlüssig an der Buchse zu befestigen (vgl. Fig. 11). Die Einlage 60 weist eine ebene Innenfläche 60.2 auf, an welcher eine radiale Außenseite der Lagerungseinrichtung zur Anlage kommen kann. Hierdurch kann sichergestellt werden, dass die Lagerungseinrichtung unabhängig von der Ausgestaltung der Buchse sich nicht an irgendwelchen Absätzen oder Vorsprüngen der Buchse verhaken kann. Vielmehr kann die Lagerungseinrichtung reibungsarm an der Innenfläche 60.2 geführt werden. Die Innenfläche 60.2 begrenzt dabei abschnittsweise radial außen die Ringkavität K.

In Figur 11 ist die Leitungsführung 10 in einem endmontierten Zustand gezeigt, wobei von der Leitungsführung 10 geführte Leitungen nicht dargestellt sind.

Die zuvor beschriebene Leitungsführung 10 ermöglicht ein einfaches Verlegen von Leitungen und ein zweckdienliches Anordnen von Leitungen derart um eine Drehachse herum, dass eine relative Verdrehung zweier Verbindungsbauteile ohne Risiko, die Leitungen zu verklemmen oder zu verhaken, möglich ist, insbesondere auch bei großen relativen Drehwinkeln über 360°. Die Lagerungseinrichtung 20 der Leitungsführung 10 ist dabei in radialer Richtung in einer Ringkavität verlagerbar und im Krümmungsradius veränderbar, sei es aufweitbar/vergrößerbar oder verkleinerbar.

In Figur 12 erkennbar, dass zwischen der Einlage 60 oder einzelnen Einlageschalen und einer Außenmantelfläche 3.3 der Spindel 3 eine Ringkavität K definiert ist, welche nach unten hin von der Auflagefläche 42.1, 44.3; 52 der unteren Befestigungseinrichtung 40 bzw. des Einsatzes begrenzt ist. Die Lagerungseinrichtung 20 kann zum einen eine gleitende Relativbewegung in radialer Richtung und in Umfangsrichtung auf der Auflagefläche 42.1, 44.3; 52 relativ zur Auflagefläche 42.1, 44.3; 52 ausführen, zum anderen eine gleitende Relativbewegung in axialer Richtung und in Umfangsrichtung entlang der Innenfläche 60.2 der Einlage.

Eine Leitung kann ausgehend vom Tragarm 5 durch die Lagerungseinrichtung 20 hindurch verlegt/geführt werden und im Bereich der weiteren (unteren) Befestigungseinrichtung nach innen durch den Durchlass 3.2 hindurch in die zylindrische Kavität der Hohlspindel 3 geführt werden, wobei die radial nach innen hervorstehende Lasche 54 ein Schamfilen mit Kanten des Durchlasses 3.2 verhindern kann.

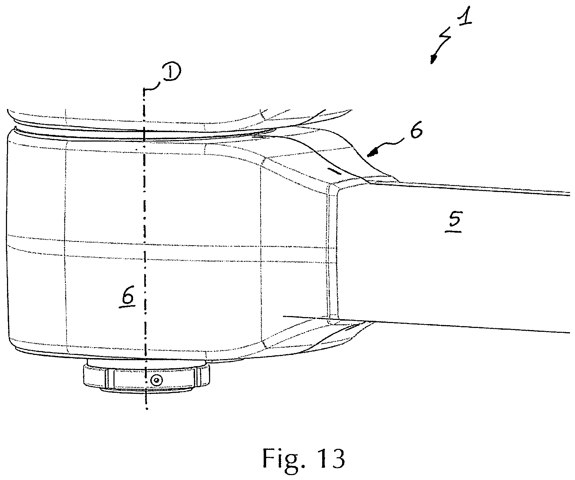

In Figur 13 ist erkennbar, dass dank der zuvor beschriebenen Leitungsführung 10 eine Verkleidung 6 einer Stativvorrichtung 1 oder eines Tragarms 5 derart möglich ist, dass überhaupt keine Leitungen hervorschauen oder eingeklemmt werden können. Die Leitungsführung 10 kann vollständig von der Verkleidung 6 umgrenzt werden und dadurch in den Tragarm 5 oder in ein Drehgelenk zwischen zwei Tragarmen integriert werden.

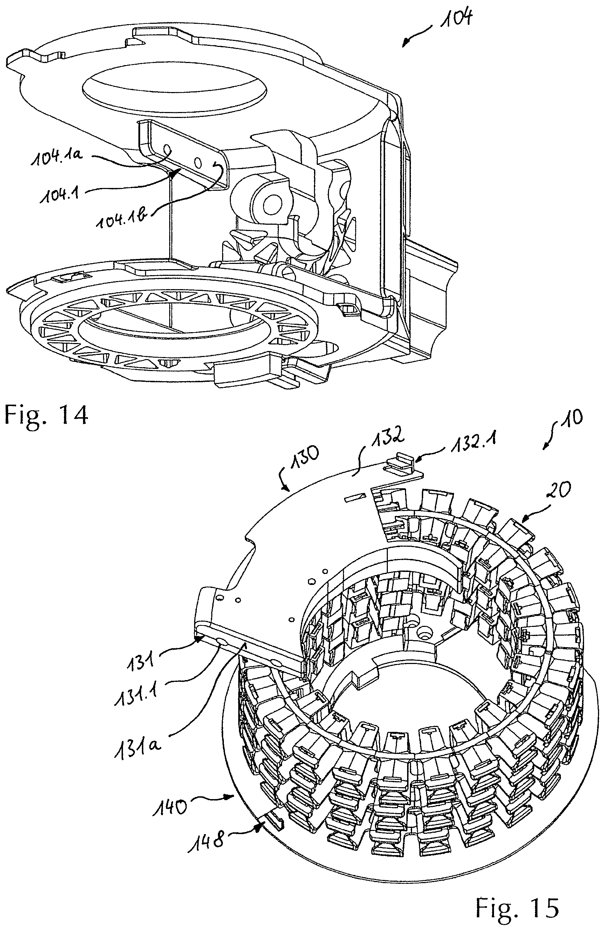

In Figur 14 ist eine Buchse 104 gezeigt, welche einen Befestigungsabschnitt 104.1 in Form einer Rippe aufweist. Die Rippe steht in axialer Richtung von einer ebenen Unterseite eines oberen Ringabschnitts der Buchse 104 hervor.

Die Rippe 104.1 erstreckt sich zumindest annähernd in radialer Richtung oder parallel zu einer radialen Richtung, je nach bevorzugter Position der Rippe. Die Rippe weist wenigstens eine Bohrung oder wenigstens ein Loch 104.1a auf, an welchem eine Befestigungseinrichtung einer erfindungsgemäßen Leitungsführung befestigt werden kann. Ferner weist die Rippe eine Stoßfläche 104.1 b auf, welche geometrisch korrespondierend zu einer entsprechenden Stoßfläche der Befestigungseinrichtung ausgebildet ist. Bevorzugt erstreckt sich die Stoßfläche zumindest annähernd in radialer Richtung oder parallel zu einer radialen Richtung. Die Stoßfläche kann auch als Radialflanke beschrieben werden.

Die Rippe 104.1 ermöglicht oder vereinfacht eine (De-)Montage der Leitungsführung auch dann, wenn die Stativvorrichtung bereits zusammengebaut oder zumindest teilweise in Betrieb genommen wurde.

In Figur 15 ist eine erfindungsgemäße Leitungsführung 10 mit den Komponenten Lagerungseinrichtung 20, Befestigungseinrichtung 130 und weitere Befestigungseinrichtung 140 gezeigt. Die Befestigungseinrichtung 130 weist einen Befestigungsabschnitt 131 mit einer Stoßfläche 131a und Befestigungsmitteln, insbesondere Bohrungen 131.1 auf. Die Stoßfläche 131a ist geometrisch korrespondierend zu der entsprechenden Stoßfläche 104.1b der Buchse ausgebildet. Ein Befestigungsoberteil 132 umfasst einen Haken 132.1 eingerichtet zur Montage an der Buchse. Der Haken 132.1 ist geometrisch korrespondierend zu einem entsprechenden Abschnitt der Buchse ausgebildet. Bevorzugt ist der Haken eingerichtet, einen außenliegenden Rand oder eine Kante oder eine Umfangskontur der Buchse zumindest formschlüssig zu umgreifen. Mittels des Hakens 132.1 kann die Befestigungseinrichtung 130 an der Buchse gehalten werden, selbst wenn die Befestigungseinrichtung 130 noch nicht am Befestigungsabschnitt befestigt ist. Der Haken 132.1 liefert somit nicht zuletzt eine Montagevereinfachung. Der Haken 132.1 kann z.B. das Positionieren der Befestigungseinrichtung 130 erleichtern, um die Befestigungseinrichtung 130 am Befestigungsabschnitt 104.1 zu fixieren. Der Haken 132.1 kann auch klammerartig oder z.B. in Form eines U-Profils ausgebildet sein.

Die weitere Befestigungseinrichtung 140 ist an einer Kupplung 148 unterteilbar, was eine Montage vereinfacht oder einen Austausch im Feld auf einfache Weise ermöglicht.

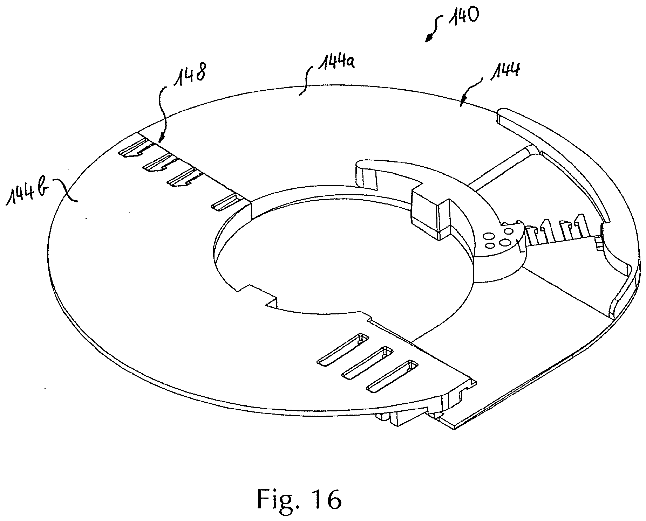

In Figur 16 ist ein erstes und zweites Teil 144a, 144b eines Fixierunterteils 144 der weiteren Befestigungseinrichtung 140 gezeigt. Die Kupplung 148 zwischen den beiden Teilen 144a, 144b ist als Steckkupplung ausgebildet. Die Kupplung 148 erstreckt sich in radialer Richtung entlang der gesamten Breite eines Ringabschnitts des Fixierunterteils 144 und unterteilt das Fixierunterteil 144 in zwei Hälften, die sich jeweils über einen Teilkreis bzw. entlang eines Kreisbogens von zumindest annähernd 180° erstrecken. Diese Unterteilung in zwei Hälften ermöglicht eine einfache (De-)Montage und eine gute Zugänglichkeit unabhängig von der relativen Drehposition des Fixierunterteils 144 relativ zur Buchse.

Bezugszeichenliste

| | |
|---|---|
| 1 | Stativvorrichtung, insbesondere Deckenstativvorrichtung |
| 3 | erstes Verbindungsbauteil, insbesondere (Hohl-)Spindel |
| 3.1 | Befestigungsabschnitt, insbesondere Nut |
| 3.2 | Durchlass (Spindelfenster) |
| 3.3 | Außenmantelfläche der Spindel |
| 4; 104 | zweites Verbindungsbauteil, insbesondere Buchse |
| 4.1; 104.1 | Befestigungsabschnitt |
| 104.1a | Bohrung oder Loch |
| 104.1b | Stoßfläche |
| 5 | Tragarm |
| 5.1 | Kabelkanal oder Nut in Tragarmprofil |
| 6 | Verkleidung |
| 7 | Drehgelenk |
| 10 | bewegungstolerante Leitungsführung |
| 20 | Lagerungseinrichtung |
| 21 | Segment, insbesondere einzelner Kabelführungsring (Windung) |
| 21.1 | Längsschlitz oder Zugang |
| 21.1a | Anlagekante oder Rand |
| 22 | zwischenmontierbarer Segmentabschnitt, insbesondere steckbarer Abschnitt |
| 22.1 | erste (untere) Segmenthälfte |
| 22.1a | (Steck-)Kupplungsabschnitt für weitere Hälfte |
| 22.2 | zweite (obere) Segmenthälfte |
| 22.2a | (Steck-)Kupplungsabschnitt für weitere Hälfte |

| 23 | Glied oder Wirbel, insbesondere mit U-förmigem Querschnittsprofil (U-Profil), insbesondere in zusammengestecktem Zustand |
|---|---|
| 23.1 | Seitenabschnitt |
| 23.1a | Lateralabschnitt des Glieds |
| 23.2 | Stift, insbesondere mit T-förmigem Querschnittsprofil (T-Profil) |
| 23.2a | Rastmittel, insbesondere elastisch vorspannbarer Rasthaken |
| 23.3 | Stiftaufnahme |
| 23.3a | Rastmittel, insbesondere Absatz |
| 24 | Verbindungsabschnitt zwischen zwei benachbarten Gliedern |
| 25 | Aussparung zwischen zwei benachbarten Gliedern |
| 26 | (Steck-)Kupplungsabschnitt für weiteren Segmentabschnitt oder für Befestigungseinrichtung |
| 26.1 | erster Kupplungsabschnitt |
| 26.2 | zweiter Kupplungsabschnitt |
| 27 | Kupplungsteil an Lagerungseinrichtung |
| 27.1 | erste Rastmittel, insbesondere elastisch vorspannbarer Rasthaken |
| 27.2 | zweite Rastmittel, insbesondere Absatz |
| | |
| 30; 130 | Befestigungseinrichtung, insbesondere zur Montage der Lagerungseinrichtung an der Buchse |
| 31; 131 | Befestigungsabschnitt |
| 131a | Stoßfläche |
| 31.1; 131.1 | Befestigungsmittel, insbesondere Durchgangsbohrung |
| 32; 132 | Befestigungsoberteil |
| 132.1 | Haken |
| 34 | Befestigungsunterteil |
| 35 | Steckverbindung |
| 35.1 | Stiftaufnahme |
| 35.2 | Stift |
| 36 | Zunge |
| 36.1 | Anlagefläche |
| 37 | Kupplungsteil an Befestigungseinrichtung |
| 37.1 | erste Rastmittel, insbesondere elastisch vorspannbarer Rasthaken |
| 37.2 | zweite Rastmittel, insbesondere Absatz |
| | |
| 40; 140 | weitere Befestigungseinrichtung, insbesondere Fixiereinrichtung zur Montage der Lagerungseinrichtung an der Spindel |
| 41 | Sicherungsabschnitt |
| 41.1 | Sicherungsmittel, insbesondere Durchgangsbohrung |
| | |
| 42 | Fixieroberteil |
| 42.1 | ebene Oberseite |
| 42.2 | Führungskante oder Führungsschiene |
| 44; 144 | Fixierunterteil |
| 144a, 144b | erstes und zweites Teil des Fixierunterteils |
| 44.1 | Zapfen oder Feder (Verdrehsicherung) |
| 44.2 | Führungskante oder Führungsschiene |
| 44.3 | Auflagefläche, insbesondere spiralförmig verlaufend |
| 44.4 | Durchlass nach radial innen |
| 44.5 | Wandung |
| 45 | Steckverbindung |
| 45.1 | Stiftaufnahme |
| 45.2 | Stift |
| 47 | Kupplungsteil an weiterer Befestigungseinrichtung |
| 47.1 | erste Rastmittel, insbesondere elastisch vorspannbarer Rasthaken |
| 47.2 | zweite Rastmittel, insbesondere Absatz |
| 148 | Kupplung |
| | |
| 50 | Einsatz (Abdeckung oder Deckel) |
| 50.2 | Führungsprofil |

51      Rasthaken
52      ebene Oberseite
53      Radialschott
54      radial nach innen hervorstehende Lasche

60      Einlage, insbesondere Einlageschale oder Einlageschott
60.1    Rasthaken
60.2    ebene Innenfläche

70      Leitung, insbesondere Kabel

dK      Außendurchmesser der Lagerungseinrichtung
dK20    (maximaler) Außendurchmesser der Lagerungseinrichtung
D       Drehachse, insbesondere vertikal ausgerichtete Hochachse

K       vordefinierter Bewegungsbereich, insbesondere Ringkavität
KL      Leitungskanal

L       Längsachse der Lagerungseinrichtung
rK      radiale Breite der Auflagefläche
R36     Krümmungsradius der Zunge


**Patentansprüche**

1.  Bewegungstolerante Leitungsführung (10), für eine Stativvorrichtung (1) eingerichtet zur Anordnung im Operationssaal, umfassend

    - eine Lagerungseinrichtung (20) zum bewegungstoleranten Lagern wenigstens einer Leitung (70) um eine Drehachse (D) zwischen zwei relativ zueinander verlagerbaren Verbindungsbauteilen (3; 4; 104); und
    - eine Befestigungseinrichtung (30; 130) zum Anordnen der wenigstens einen Leitung relativ zu einem der Verbindungsbauteile (3; 4; 104); wobei die Lagerungseinrichtung (20) an der Befestigungseinrichtung (30; 130) fixierbar ist und zum bewegungstoleranten, insbesondere drehtoleranten Führen der wenigstens einen Leitung um die Drehachse und/oder in Richtung zumindest annähernd parallel zur Drehachse eingerichtet ist,

    **dadurch gekennzeichnet, dass** die Lagerungseinrichtung (20) in der Art einer Gliederkette gebildet ist, wobei die Lagerungseinrichtung (20) durch einzelne Glieder (23) gebildet ist, welche jeweils mittels wenigstens eines Verbindungsabschnitts (24) relativ zueinander bewegbar sind und die Verbindungsabschnitte durch Aussparungen (25) zwischen den einzelnen Gliedern definiert werden.

2.  Leitungsführung (10) nach Anspruch 1, wobei die Aussparungen zwischen den Gliedern der Gliederkette sich orthogonal zu deren Längsachse erstrecken.

3.  Leitungsführung (10) nach Anspruch 1, wobei die Lagerungseinrichtung (20) elastisch verformbar ist, wobei die Lagerungseinrichtung (20) bevorzugt im Durchmesser und/oder in Richtung zumindest annähernd parallel zur Drehachse variabel ist.

4.  Leitungsführung (10) nach Anspruch 1, 2 oder 3, wobei die Aussparungen (25), insbesondere längliche Aussparungen, abschnittsweise entlang einer Längsachse (L) der Lagerungseinrichtung (20) angeordnet sind und sich bevorzugt orthogonal zur Längsachse in radialer Richtung erstrecken.

5.  Leitungsführung (10) nach einem der vorhergehenden Ansprüche, wobei die Glieder (23) ein Querschnittsprofil mit drei Seitenabschnitten (23.1) aufweisen, insbesondere ein U-förmiges Querschnittsprofil mit wenigstens einem an einem oder beiden freien Enden des U-Profils in axialer Richtung abstehenden Lateralabschnitt (23.1a).

6.  Leitungsführung (10) nach einem der vorhergehenden Ansprüche, wobei die Lagerungseinrichtung (20) modulartig aufgebaut ist und durch eine Mehrzahl von bevorzugt baugleichen Segmenten (21, 22) gebildet ist, wobei das jeweilige Segment (21, 22) bevorzugt eine Windung bildet.

**7.** Leitungsführung (10) nach einem der vorhergehenden Ansprüche, wobei die Lagerungseinrichtung (20) wenigstens einen zwischenmontierbaren Segmentabschnitt (22) aufweist, welcher ein(en) Kupplungsteil (27) oder Kupplungsabschnitt (26) aufweist, an welchen die Befestigungseinrichtung (30; 130) oder ein weiterer Segmentabschnitt kuppelbar ist, insbesondere in Umfangsrichtung steckbar, wobei der Segmentabschnitt (22) bevorzugt einen Kreisbogen von zumindest annähernd 360° beschreibt, insbesondere in einem entspannten, undeformierten Zustand.

**8.** Leitungsführung (10) nach einem der vorhergehenden Ansprüche, wobei die Lagerungseinrichtung (20) zum bewegungstoleranten Lagern wenigstens eines Kabels um eine Drehachse (D) zwischen zwei relativ zueinander verdrehbaren Verbindungsbauteilen (3; 4; 104) eingerichtet ist.

**9.** Leitungsführung (10) nach einem der vorhergehenden Ansprüche, wobei die Lagerungseinrichtung (20) und die Befestigungseinrichtung (30; 130) jeweils einen Kupplungsteil (27, 37) aufweisen, welche geometrisch korrespondierend zueinander ausgebildet sind, wobei die Lagerungseinrichtung (20) und die Befestigungseinrichtung (30; 130) mittels der Kupplungsteile (27, 37) aneinander kuppelbar sind, insbesondere in Umfangsrichtung steckbar.

**10.** Leitungsführung (10) nach einem der vorhergehenden Ansprüche, wobei die Leitungsführung eine weitere Befestigungseinrichtung (40) umfasst, mittels welcher die Lagerungseinrichtung (20) an einem Befestigungsabschnitt am anderen Verbindungsbauteil (3), insbesondere an einer Spindel, ortsfest anordenbar ist, wobei die weitere Befestigungseinrichtung (40) an der Lagerungseinrichtung (20) fixiert ist, insbesondere mittels einer Steckverbindung.

**11.** Leitungsführung (10) nach einem der vorhergehenden Ansprüche, wobei die Leitungsführung (10) modulartig aufgebaut ist und durch eine Baugruppe aus einer Vielzahl aneinander kuppelbarer, insbesondere steckbarer Komponenten (20, 30, 40, 50) gebildet ist.

**12.** Leitungsführung (10) nach einem der vorhergehenden Ansprüche, wobei die gesamte Leitungsführung (10) oder zumindest die Lagerungseinrichtung (20) und/oder die Befestigungseinrichtung (30; 130) zumindest abschnittsweise aus einem Kunststoff-Material besteht, insbesondere aus einem spritzbaren Thermoplast.

**13.** Leitungsführung (10) nach einem der vorhergehenden Ansprüche, wobei die Befestigungseinrichtung (30; 130) zum Anordnen der wenigstens einen Leitung an einer Buchse (4; 104) der Stativvorrichtung eingerichtet ist.

**14.** Leitungsführung (10) nach einem der vorhergehenden Ansprüche, wobei die Lagerungseinrichtung (20) eine Vielzahl von spiralförmigen Windungen oder Segmenten (21, 22) aufweist.

**15.** Drehgelenk (7) oder Buchse (4; 104) für eine Stativvorrichtung (1) zur Anordnung im Operationssaal, umfassend eine bewegungstolerante Leitungsführung (10) nach einem der vorhergehenden Ansprüche, oder Stativvorrichtung (1), umfassend das Drehgelenk (7) oder die Buchse (4; 104) jeweils mit der bewegungstoleranten Leitungsführung (10) nach einem der vorhergehenden Ansprüche.

**16.** Stativvorrichtung (1) zur Anordnung im Operationssaal, insbesondere auch zum örtlichen Verlagern einer medizintechnischen Einrichtung im Operationssaal, umfassend eine bewegungstolerante Leitungsführung (10) nach einem der Ansprüche 1 bis 14, wobei die Stativvorrichtung ein erstes Verbindungsbauteil in Form einer Spindel (3) sowie ein zweites Verbindungsbauteil in Form einer Buchse (4; 104) aufweist, wobei die Spindel und die Buchse jeweils eine Befestigungskupplung oder einen Befestigungsabschnitt (3.1, 4.1; 104.1) aufweisen, an welcher/welchem die Lagerungseinrichtung (20) sowohl an der Spindel als auch an der Buchse befestigt ist und durchmesservariabel um die Spindel gelagert ist.

**17.** Verwendung einer bewegungstoleranten Leitungsführung (10) an einer Stativvorrichtung (1), eingerichtet zur Anordnung im Operationssaal, nach einem der Ansprüche 1 bis 14, wobei wenigstens eine Leitung in einer Lagerungseinrichtung (20) der Leitungsführung (10) bewegungstolerant und durchmesservariabel zwischen zwei relativ zueinander verlagerbaren Befestigungspunkten gelagert und um eine Drehachse in einer Buchse geführt ist, wobei die Leitungsführung (10) mittels einer Befestigungseinrichtung (30; 130) an der Buchse befestigt ist.

**Claims**

**1.** A movement-tolerant line arrangement (10) for a stand device (1) configured for arrangement in an operating room, comprising

- a mounting apparatus (20) for movement-tolerant mounting of at least one line (70) about an axis of rotation (D) between two connection components (3; 4; 104) that are displaceable relative to one another; and
- a fastening apparatus (30; 130) for arranging the at least one line relative to one of the connection components (3; 4; 104);

wherein the mounting apparatus (20) is fixable to the fastening apparatus (30; 130) and is configured for movement-tolerant, in particular rotation-tolerant, guidance of the at least one line about the axis of rotation and/or in a direction at least approximately parallel to the axis of rotation,
**characterized in that**
the mounting apparatus (20) is configured as a kind of linked element chain, wherein the mounting apparatus (20) is formed by single elements (23) that are movable relative to one another by means of at least one connection portion (24), respectively, and the connection portions are defined by recesses (25) between the individual elements.

2. The line arrangement (10) according to claim 1, wherein the recesses between the elements of the linked element chain extend orthogonally with respect to their longitudinal axis.

3. The line arrangement (10) according to claim 1, wherein the mounting apparatus (20) is elastically deformable, wherein the mounting apparatus (20) is preferably variable in diameter and/or direction at least approximately parallel to the axis of rotation.

4. The line arrangement (10) according to claim 1, 2 or 3, wherein the recesses (25), in particular longitudinal recesses, are arranged in sections along a longitudinal axis (L) of the mounting apparatus (20) and preferably extend orthogonally to the longitudinal axis in a radial direction.

5. The line arrangement (10) according to any one of the preceding claims, wherein the elements (23) comprise a cross-sectional profile with three side portions (23.1), in particular an U-shaped cross-sectional profile including at least one lateral portion (23.1 a) protruding on one or both free ends of the U-shaped profile in an axial direction.

6. The line arrangement (10) according to any one of the preceding claims, wherein the mounting apparatus (20) is configured in modules and is formed by a plurality of preferably identical segments (21, 22), wherein the respective segment (21, 22) preferably constitutes a winding.

7. The line arrangement (10) according to any one of the preceding claims, wherein the mounting apparatus (20) comprises at least one segment portion (22) being mountable in-between comprising a coupling part (27) or a coupling portion (26) where the fastening apparatus (30; 130) or a further segment portion is coupleable, in particular pluggable in a peripheral direction, wherein the segment portion (22) preferably defines an arc of at least approximately 360°, in particular, in a relaxed, not deformed state.

8. The line arrangement (10) according to any one of the preceding claims, wherein the mounting apparatus (20) is configured for movement-tolerant mounting of at least one cable about an axis of rotation (D) between two connection components (3; 4; 104) being twistable relative to one another.

9. The line arrangement (10) according to any one of the preceding claims, wherein the mounting apparatus (20) and the fastening apparatus (30; 130) each comprise a coupling part (27, 37) that are formed in a geometrically corresponding way to one another, wherein the mounting apparatus (20) and the fastening apparatus (30; 130) are couplable to one another by means of coupling parts (27; 37), in particular pluggable in a peripheral direction.

10. The line arrangement (10) according to any one of the preceding claims, wherein the line arrangement comprises a further fastening apparatus (40) by means of which the mounting apparatus (20) may be fixedly positioned at a fastening portion on the other connection component (3), in particular at a spindle, wherein the further fastening apparatus (40) is fixed to the mounting apparatus (20), in particular by means of a plug connection.

11. The line arrangement (10) according to any one of the preceding claims, wherein the line arrangement (10) is configured in modules and is formed by an assembly of a plurality of components (20, 30, 40, 50) that are couplable to one another, in particular pluggable.

12. The line arrangement (10) according to any one of the preceding claims, wherein the complete line arrangement (10) or at least the mounting apparatus (20) and/or the fastening apparatus (30; 130) are made of a synthetic material, in particular of an injectable thermoplastics material, at least in sections.

13. The line arrangement (10) according to any one of the preceding claims, wherein the fastening apparatus (30; 130) is configured for arranging of the at least one line at a socket (4; 104) of the stand device.

14. The line arrangement (10) according to any one of the preceding claims, wherein the mounting apparatus (20) has a plurality of spirally formed windings or segments (21, 22).

15. A rotary joint (7) or socket (4; 104) for a stand device (1) for arrangement in an operating room, comprising a movement-tolerant line arrangement (10) according to any one of the preceding claims, or stand device (1) comprising the rotary joint (7) or the socket (4; 104) with the movement-tolerant line arrangement (10), respectively, according to one of the preceding claims.

16. A stand device (1) for arrangement in the operating room, in particular also for displacing the position of a medical device in an operating room, comprising the movement-tolerant line arrangement (10) according to any one of claims 1 to 14, wherein the stand device comprises a first connection component adapted as a spindle (3) and a second connection component adapted as a socket (4; 104), wherein the spindle and the socket include a fastening coupling or a fastening portion (3.1, 4.1; 104.1), respectively, to which the mounting apparatus (20) is fastened both to the spindle and the socket and is mounted around the spindle in a way enabling varying diameters.

17. A usage of the movement-tolerant line arrangement (10) on the stand device (1) configured for arrangement in an operating room, according to any one of claims 1 to 14, wherein at least one line in the mounting apparatus (20) of the line arrangement (10) is mounted in a movement-tolerant way and enabling varying diameters between two fastening points being displaceable relative to one another and is guided around an axis of rotation in a socket, wherein the line arrangement (10) is fastened to the socket by means of a fastening apparatus (30; 130).


**Revendications**

1. Câblage insensible aux mouvements (10), pour un dispositif sur pied (1) conçu pour être disposé dans le bloc opératoire, comprenant

   - un système de support (20) servant à supporter de manière insensible aux mouvements au moins une ligne (70) autour d'un axe de rotation (D) entre deux éléments de liaison (3 ; 4 ; 104) pouvant être déplacés l'un par rapport à l'autre ; et
   - un système de fixation (30 ; 130) servant à disposer la ou les lignes par rapport à l'un des éléments de liaison (3 ; 4 ; 104) ; le système de support (20) pouvant être bloqué sur le système de fixation (30 ; 130) et étant conçu afin de guider de manière insensible aux mouvements, en particulier de manière insensible aux rotations, la ou les lignes autour de l'axe de rotation et/ou en direction au moins approximativement parallèle par rapport à l'axe de rotation,

   **caractérisé en ce que** le système de support (20) est réalisé à la manière d'une chaîne à maillons, le système de support (20) étant formé par des maillons individuels (23) qui peuvent chacun être déplacés l'un par rapport à l'autre au moyen d'au moins une section de liaison (24) et les sections de liaison étant définies par des évidements (25) entre les maillons individuels.

2. Câblage (10) selon la revendication 1, dans lequel les évidements entre les maillons de la chaîne à maillons s'étendent perpendiculairement à son axe longitudinal.

3. Câblage (10) selon la revendication 1, dans lequel le système de support (20) est déformable élastiquement, le système de support (20) étant de préférence variable en diamètre et/ou dans une direction au moins approximativement parallèle à l'axe de rotation.

4. Câblage (10) selon la revendication 1, 2 ou 3, dans lequel les évidements (25), en particulier les évidements allongés sont disposés partiellement le long d'un axe longitudinal (L) du système de support et s'étendent de préférence perpendiculairement à l'axe longitudinal dans la direction radiale.

5. Câblage (10) selon l'une des revendications précédentes, dans lequel les maillons (23) présentent un profil trans-

**EP 3 175 524 B1**

versal ayant trois sections latérales (23.1), en particulier un profil transversal en forme de U ayant au moins une section latérale (23.1a) en saillie dans la direction axiale à une ou aux deux extrémités du profil en U.

6. Câblage (10) selon l'une des revendications précédentes, dans lequel le système de support (20) a une structure modulaire et est formé par une pluralité de segments de préférence structurellement identiques (21, 22), le segment respectif (21, 22) formant de préférence un enroulement.

7. Câblage (10) selon l'une des revendications précédentes, dans lequel le système de support (20) présente au moins une section de segment (22) qui peut être interposée et qui présente une partie d'accouplement (27) ou une section d'accouplement (26) sur laquelle le système de fixation (30 ; 130) ou une autre section de segment peut être accouplée, notamment enfichée dans la direction circonférentielle, la section de segment (22) décrivant de préférence un arc d'au moins 360° environ, en particulier à l'état détendu et non déformé.

8. Câblage (10) selon l'une des revendications précédentes, dans lequel le système de support (20) est conçu pour supporter de manière insensible aux mouvements au moins un câble autour d'un axe de rotation (D) entre deux éléments de liaison (3 ; 4 ; 104) qui peuvent tourner l'un par rapport à l'autre.

9. Câblage (10) selon l'une des revendications précédentes, dans lequel le système de support (20) et le système de fixation (30 ; 130) présentent chacun un élément d'accouplement (27, 37) qui sont géométriquement conçus pour correspondre l'un à l'autre, le système de support (20) et le système de fixation (30 ; 130) pouvant être accouplés l'un à l'autre au moyen d'éléments d'accouplement (27, 37), en particulier pouvant être enfichés dans le sens circonférentiel.

10. Câblage (10) selon l'une des revendications précédentes, dans lequel le câblage comprend un autre système de fixation (40), au moyen duquel le système de support (20) peut être disposé de manière fixe sur une section de fixation sur l'autre élément de liaison (3), en particulier sur une broche, l'autre système de fixation (40) étant fixé sur le système de support (20), notamment au moyen d'une connexion enfichable.

11. Câblage (10) selon l'une des revendications précédentes, dans lequel le câblage (10) a une structure modulaire et est formé par un module constitué d'une pluralité de composants (20, 30, 40, 50) qui peuvent être accouplés l'un à l'autre, en particulier qui peuvent être enfichés.

12. Câblage (10) selon l'une des revendications précédentes, dans lequel l'ensemble du câblage (10) ou au moins le système de support (20) et/ou le système de fixation (30 ; 130) est constitué au moins partiellement de matière plastique, en particulier d'un thermoplastique moulé par injection.

13. Câblage (10) selon l'une des revendications précédentes, dans lequel le système de fixation (30 ; 130) est conçu pour disposer l'au moins une ligne sur une douille (4 ; 104) du dispositif sur pied.

14. Câblage (10) selon l'une des revendications précédentes, dans lequel le système de support (20) présente une pluralité d'enroulements ou de segments en spirale (21, 22).

15. Articulation rotative (7) ou douille (4 ; 104) pour un dispositif sur pied (1) destiné à être disposé dans le bloc opératoire, comprenant un câblage insensible aux mouvements (10) selon l'une des revendications précédentes, ou dispositif sur pied (1) comprenant l'articulation rotative (7) ou la douille (4; 104) chacune avec le câblage insensible aux mouvements (10) selon l'une des revendications précédentes.

16. Dispositif sur pied (1) destiné à être disposé dans le bloc opératoire, en particulier pour le déplacement local d'un système médical dans le bloc opératoire, comprenant un câblage insensible aux mouvements (10) selon l'une des revendications 1 à 14, le dispositif présentant un premier élément de liaison sous forme d'une broche (3) ainsi qu'un second élément de liaison sous forme d'une douille (4; 104), la broche et la douille présentant chacune un accouplement de fixation ou une section de fixation (3.1, 4.1 ; 104.1), sur lequel ou laquelle le système de support (20) est fixé tant sur la broche que sur la douille et est monté autour de la broche avec un diamètre variable.

17. Utilisation d'un câblage insensible aux mouvements (10) sur un dispositif sur pied (1), conçu pour être disposé dans le bloc opératoire, selon l'une des revendications 1 à 14, au moins une ligne dans un système de support (20) du câblage (10) étant montée de manière insensible aux mouvements et avec un diamètre variable entre deux points de fixation déplaçables l'un par rapport à l'autre et étant guidée autour d'un axe de rotation dans une douille, le

22

câblage (10) étant fixé à la douille au moyen d'un système de fixation (30 ; 130).

Fig. 1A

Fig. 1B

Fig. 1C

Fig. 2A

Fig. 2B

Fig. 2C

Fig. 2D

Fig. 3

Fig. 4

Fig. 5

Fig. 6

Fig. 7

Fig. 8A

Fig. 8B

Fig. 9A

Fig. 9B

Fig. 10A

Fig. 10B

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008112675 A1
- JP H09278293 A
- NL 103278276 C2
- JP 5356892 B